# EUROPEAN PATENT SPECIFICATION

(11) **EP 3 647 382 B1**
(45) Date of publication and mention of the grant of the patent: **06.09.2023**
(21) Application number: 18824217.6
(22) Date of filing: 27.06.2018
(51) Int. Cl.: C09D 11/328, B41J 2/01, B41J 2/175, B41M 5/00, C09D 11/40, D06P 1/52, D06P 5/30

(54) **INKJET INK FOR TEXTILE PRINTING, INK CARTRIDGE, INK SET, AND INKJET TEXTILE PRINTING METHOD**
TINTENSTRAHLTINTE FÜR TEXTILDRUCK, TINTENPATRONE, TINTENSATZ UND TINTENSTRAHLTEXTILDRUCKVERFAHREN
ENCRE POUR JET D'ENCRE DESTINÉE À UNE IMPRESSION SUR TEXTILE, CARTOUCHE D'ENCRE, ENSEMBLE D'ENCRES, ET PROCÉDÉ D'IMPRESSION SUR TEXTILE À JET D'ENCRE

(30) Priority: 27.06.2017 JP 2017125420; 26.06.2018 JP 2018121344
(43) Date of publication of application: 06.05.2020
(73) Proprietor: FUJIFILM Corporation, Tokyo 106-8620 (JP)
(72) Inventor: KODAMA Kunihiko, Kanagawa 258-8577 (JP); USHIJIMA Kenta, Kanagawa 258-8577 (JP); FUJIE Yoshihiko, Kanagawa 258-8577 (JP); MIZUMURA Masatoshi, Kanagawa 258-8577 (JP); OHMOTO Makoto, Kanagawa 258-8577 (JP); HARA Minako, Kanagawa 258-8577 (JP); MAKUTA Toshiyuki, Kanagawa 258-8577 (JP)
(74) Representative: Klunker IP Patentanwälte PartG mbB
(86) International application number: PCT/JP2018/024474
(87) International publication number: WO 2019/004327

(56) References cited:
- EP-A1- 2 641 943
- WO-A1-2012/073563
- WO-A1-2012/137529
- JP-A- S5 845 272
- JP-A- H08 218 015
- JP-A- 2004 075 920
- JP-A- 2004 197 104
- JP-A- 2004 516 355
- JP-A- 2009 057 452
- US-A- 6 034 154
- US-A1- 2011 184 123

## Description

### BACKGROUND OF THE INVENTION

### 1. Field of the Invention

The present invention relates to an inkjet ink for textile printing, an ink cartridge, an ink set, and an inkjet textile printing method.

### 2. Description of the Related Art

Conventionally, coloring agents used for coloring fabrics are either dyes or pigments. A screen printing method, a roller printing method, a transfer method, an inkjet method, and the like have been carried out as methods for industrial coloring of fabrics using these coloring agents. In particular, the inkjet method does not need to produce a plate as compared with other methods and is capable of quickly forming an image with excellent gradation. Furthermore, it can be said that the inkjet method is an excellent image forming method having an environmental advantage such as a small amount of waste liquid because it uses only a necessary amount of ink as a formed image.

JP2008-069203A describes a printing ink containing: a coloring agent containing a coloring material by a polymer compound; water; and a water-soluble organic solvent.

JP1998-168151A (JP-H10-168151A) describes an aqueous inkjet ink containing a dispersion and a disperse dye.

WO2017/021278A discloses an inkjet printing liquid containing thermally reactive composite resin particles in an aqueous medium.

US 6,034,154 A teaches polymer fine particles for a jet ink, each polymer fine particle containing a colorant, wherein the polymer fine particles have an average particle diameter in the range of 5 to 700 nm, a maximum particle diameter of at most 1000 nm, and a particle size distribution, at m value of shape parameter according to the Weibull distribution, of at least 1.3, and wherein the polymer fine particles are able to form a coating film at room temperature. By using the aforementioned polymer fine particles, it is possible to provide polymer fine particles for a jet ink which display a superior storage stability, resistance to wear, durability, water resistance, solvent resistance, chemical resistance and the like, in which there is no clogging of the inkjet.

US 2011/184123 A1 teaches a pigment dispersion including water, an aqueous polymer and a pigment as essential components, wherein the aqueous polymer is a carboxyl group-containing polyurethane which is formed by reacting a diol compound, a diisocyanate compound and a reaction product, composed of a specific compound and prepared by reacting a diol compound having one or two carboxyl groups within each molecule with a diisocyanate compound and which also has a reaction index as calculated by the following Formula within a range from 0.95 to 1.10: Reaction index=(reaction rate of isocyanate group)×[(number of moles of diisocyanate compound(B))/(number of moles of diol compound(A))].

EP 2641943 A1 discloses an ink composition for ink jet textile printing, the ink composition containing a pigment, a urethane resin emulsion, an emulsion-type silicone compound, and water, wherein the urethane resin emulsion content is 3.5 to 14 mass% relative to the total mass of the ink composition, the emulsion-type silicone compound content is in the range of 0.4 to 3.0 mass% relative to the total mass of the ink composition, and the water content is in the range of 20 to 80 mass% relative to the total mass of the ink composition.

### SUMMARY OF THE INVENTION

However, in JP2008-069203A, the polymer compound is an acrylic polymer compound, and there is no specific description of a urethane resin.

In the inkjet recording ink of JP1998-168151A (JP-H10-168151A), a urethane resin is used as a dispersant, and the inkjet recording ink is mainly applicable only to coloring of polyester fabrics.

In WO2017/021278A, the resin particles contain no coloring agent.

An object of the present invention is to provide an inkjet ink for textile printing capable of coloring various types of fabrics and exhibiting excellent color developability and dyeing fastness (washing resistance, rub resistance, perspiration resistance, and dry cleaning resistance) in an image to be obtained, an ink cartridge filled with the inkjet ink for textile printing, an ink set, and an inkjet textile printing method using the inkjet ink for textile printing.

The present inventors have conducted intensive studies to achieve the above object, and found that the above object can be achieved with an inkjet ink according to the claims. Details of the mechanism for achieving the above object according to the present invention are not completely clear, but the present inventors speculate as follows.

In a case where an inkjet ink for textile printing containing colored resin particles containing a urethane resin and at least one type of dye selected from the group consisting of oil-soluble dyes, disperse dyes, and vat dyes is printed on a fabric by an inkjet method, the urethane resin in the colored resin particles forms a film by heating or the like. In that case, the film is formed in a state in which the dye is taken into the urethane resin.

Accordingly, it is thought that it is possible to exhibit high color developability derived from the dye, and excellent dyeing fastness (washing resistance, rub resistance, perspiration resistance, and dry cleaning resistance) is obtained with little dye bleed out.

In addition, the colored resin particles are used as, for example, a dispersion. In a case where the urethane resin has a high acid value, it is thought that the film formed by heating or the like has high hydrophilicity, and thus the dyeing fastness is reduced. In contrast, in a case where the urethane resin has a low acid value, it is thought that the dispersibility of the colored resin particle dispersion deteriorates.

Accordingly, it is thought in a case where the acid value of the urethane resin is appropriately adjusted, excellent dyeing fastness is obtained while the dispersibility of the dispersion in a case where the colored resin particles are used as the dispersion is maintained.

According to the present invention, it is possible to provide an inkjet ink for textile printing capable of coloring various types of fabrics and exhibiting excellent color developability and dyeing fastness (washing resistance, rub resistance, perspiration resistance, and dry cleaning resistance) in an image to be obtained, an ink cartridge filled with the inkjet ink for textile printing, and an inkjet textile printing method using the inkjet ink for textile printing.

### DESCRIPTION OF THE PREFERRED EMBODIMENTS

Hereinafter, the present invention, which is defined in the appended claims, will be described in detail.

In this specification, a numerical value range expressed using "to" means a range including numerical values before and after "to" as a lower limit value and an upper limit value.

In this specification, a "substituent group A" refers to the substituents described in [0117] in WO2017/131107A.

In this specification, a substituent group A1 includes the following substituents.

### (Substituent Group A1)

A halogen atom, an alkyl group (preferably having 1 to 30 carbon atoms), a cycloalkyl group (preferably having 3 to 30 carbon atoms), an aryl group (preferably having 6 to 30 carbon atoms), a heterocyclic group (preferably having 3 to 30 carbon atoms), an acyl group (preferably having 2 to 30 carbon atoms), a hydroxyl group, a carboxyl group, a sulfo group, a cyano group, a nitro group, an alkoxy group (preferably having 1 to 30 carbon atoms), an aryloxy group (preferably having 6 to 30 carbon atoms), an acyloxy group (preferably having 2 to 30 carbon atoms), an alkoxycarbonyl group (preferably having 2 to 30 carbon atoms), an aryloxycarbonyl group (preferably having 7 to 30 carbon atoms), a carbamoyl group, a sulfamoyl group, an alkylsulfonyl group (preferably having 1 to 30 carbon atoms), an arylsulfonyl group (preferably having 6 to 30 carbon atoms), an amino group, an acylamino group (preferably having 1 to 30 carbon atoms), an alkylsulfonylamino group (preferably having 1 to 30 carbon atoms), an arylsulfonylamino group (preferably having 6 to 30 carbon atoms), and substituents obtained by combining two or more thereof.

### [Inkjet Ink for Textile Printing]

An inkjet ink for textile printing according to the embodiment of the present invention contains (a) water, (b) aqueous organic solvent, (c) colored resin particles, and (d) a wax, and the colored resin particles contain a urethane resin and at least one type of dye selected from the group consisting of an oil-soluble dye, a disperse dye, and a vat dye, wherein the aqueous organic solvent has an aqueous solubility at 25°C of 10 g/100g-H₂O or greater.

### <(a) Water>

The inkjet ink for textile printing according to the embodiment of the present invention contains water. The water is not particularly limited. Pure water such as ion exchange water, ultrafiltered water, reverse osmosis water, or distilled water, or ultrapure water can be used, and ultrapure water is more preferably used.

The water content in the inkjet ink for textile printing is preferably 40 to 80 mass%, more preferably 45 to 75 mass%, and particularly preferably 50 to 75 mass%. In a case where the water content is within the above range, the inkjet ink for textile printing has excellent stability (precipitation or the like is unlikely to occur), and has excellent jetting stability as an inkjet ink.

### <(b) Aqueous Organic Solvent>

The inkjet ink for textile printing according to the embodiment of the present invention contains an aqueous organic solvent.

The aqueous organic solvent has an aqueous solubility at 25°C of 10 g/100g-H₂O or greater, and more preferably 20 g/100g-H₂O or greater, and is particularly preferably miscible with water at an arbitrary ratio. Examples of the aqueous organic solvent include an alcohol-based solvent, an amide-based solvent, and a nitrile-based solvent, and an alcohol-based solvent and an amide-based solvent are preferable. For example, methanol, ethanol, n-propanol, isopropanol, n-butanol, isobutanol, tert-butanol, trimethylolpropane, ethylene glycol, diethylene glycol, triethylene glycol, polyethylene glycol, propylene glycol, butylene glycol, 1,2,6-hexanetriol, thioglycol, hexylene glycol, glycerin, diglycerin, 2-pyrrolidone, N-methyl-2-pyrrolidone, 1,5-pentanediol, 1,6-hexanediol, ethylene glycol monoethyl ether, ethylene glycol monobutyl ether, and acetonitrile can be mentioned. Preferred is trimethylolpropane, ethylene glycol, diethylene glycol, triethylene glycol, tetraethylene glycol, propylene glycol, glycerin, 2-pyrrolidone, 1,5-pentanediol, 1,6-hexanediol, or ethylene glycol monobutyl ether; more preferred is ethylene glycol, diethylene glycol, triethylene glycol, propylene glycol, glycerin, 2-pyrrolidone, ethylene glycol monobutyl ether, or tetraethylene glycol; and particularly preferred is ethylene glycol, glycerin, 2-pyrrolidone, or tetraethylene glycol.

The aqueous organic solvent content in the inkjet ink for textile printing is preferably 5 to 50 mass%, more preferably 5 to 40 mass%, and even more preferably 10 to 30 mass%. In a case where the aqueous organic solvent content is within the above range, the inkjet ink for textile printing has excellent stability (precipitation is unlikely to occur), and has excellent jetting stability as an inkjet ink.

Moreover, the following can also be used as an aqueous organic solvent.

### <(b1) Aqueous Organic Solvent>

The ink according to the embodiment of the present invention contains an aqueous organic solvent. The solubility of the polymer in the colored resin particles in the aqueous organic solvent is 0.05 mass% or greater.

The aqueous organic solvent is an ether or amide. The boiling point of the aqueous organic solvent is 287°C or higher.

The aqueous organic solvent has an aqueous solubility at 25°C of 10 g/100g-H₂O or greater, and more preferably 20 g/100g-H₂O or greater, and is particularly preferably miscible with water at an arbitrary ratio.

The solubility of the polymer in the aqueous organic solvent is preferably 0.05 mass% or greater since the color density can be improved. In a case where the solubility is 0.05 mass% or greater, the color density can be dramatically improved in heat fixing after printing on a fabric by an inkjet method.

The above phenomenon is not seen in normal printing dye inks or pigment inks. This is thought to be due to the fact that in the present invention, the polymer of the colored resin particles is easily dissolved in the aqueous organic solvent, and association between the dyes is easily broken, whereby the original color of the dye can be sufficiently expressed.

The solubility of the polymer in the aqueous organic solvent is preferably 5 mass% or less, and more preferably 1 mass% or less.

The solubility can be measured by a general method, but in the present invention, it can be measured by the following method. The measurement of the solubility of the polymer was performed with polymer particles produced without adding a dye in the production of the colored resin particles. An aqueous dispersion of polymer particles is naturally left on a petri dish at 25°C and dried until there is no decrease in mass. 100 g of a water-soluble organic solvent is weighed in a glass vial, and the polymer solid obtained as above is added thereto. An ultrasonic cleaning device (manufactured by AS ONE Corporation, 1-6900-01) applies ultrasonic waves to the mixture for 30 minutes to visually evaluate the presence or absence of dissolution. The weighed value of the polymer solid is appropriately changed, and the solubility (mass%) is calculated from the weighed value of the maximum amount of the solid which completely dissolves and the mass of the water-soluble organic solvent.

As described above, in a case where the boiling point of the aqueous organic solvent is 287°C or higher, the color density can be improved. In contrast, in a case where the boiling point is lower than 287°C, a sufficient color density may not be obtained. This is thought to be due to the fact that the higher the boiling point, the lower the volatilization rate of the water-soluble organic solvent during the heat fixing, and the longer the time for the polymer and the aqueous organic solvent to be sufficiently compatible with each other. In addition, the higher the boiling point, the greater the continuous jetting property, and the reason for this is presumed to be that the drying on the inkjet nozzle surface is suppressed.

In the present invention, the boiling point can be measured by a general distillation method at atmospheric pressure. The boiling point in the specification is a value of the boiling point under standard conditions (1 atm, 25°C).
1 atm equals 101.325 kPa.

In the measurement of the boiling point of the aqueous organic solvent, in a case where the boiling point exceeds 350°C, the aqueous organic solvent may be decomposed during the measurement, and it may be difficult to measure the accurate boiling point. In the present invention, an aqueous organic solvent having a boiling point higher than 350°C can be used after adjustment of the boiling point to "350°C or higher".

The aqueous organic solvent content is preferably 25 to 45 mass%, and more preferably 30 to 40 mass% with respect to the total mass of the ink.

The aqueous organic solvent content is preferably 25 mass% or greater with respect to the total mass of the ink. This is because, since the polymer is easily dissolved and the inkjet nozzle surface is hardly dried, the color density and the continuous jetting property hardly deteriorate. In addition, the aqueous organic solvent content is preferably 45 mass% or less with respect to the total mass of the ink since the storage stability of the polymer in the ink hardly deteriorates. The aqueous organic solvent content is preferably appropriately selected within the above range.

The aqueous organic solvent is not particularly limited as long as it satisfies the above conditions. Specific examples thereof include triethylene glycol, tetraethylene glycol, polyethylene glycol (for example, having a molecular weight of 400 to 800), hydroxyethylpyrrolidone, hydroxypropylpyrrolidone, valerolactam, caprolactam, and heptalactam. From the viewpoint of jetting property in the inkjet method and easy volatilization during the heat fixing, more preferred are triethylene glycol, tetraethylene glycol, polyethylene glycol 400, hydroxyethylpyrrolidone, and hydroxypropylpyrrolidone, particularly preferred are triethylene glycol, tetraethylene glycol, and hydroxyethylpyrrolidone, and most preferred are triethylene glycol and tetraethylene glycol.

### <(c) Colored Resin Particles>

The inkjet ink for textile printing according to the embodiment of the present invention contains colored resin particles.

The average particle diameter of the colored resin particles is preferably 200 nm or less, more preferably 20 to 200 nm, and even more preferably 40 to 150 nm. In a case where the average particle diameter of the colored resin particles is 200 nm or less, direct printing on a fabric by an inkjet method is facilitated.

A value of a volume average particle diameter (MV) measured using a particle size distribution measurement apparatus (NANOTRAC UPA EX150, manufactured by Nikkiso Co., Ltd., trade name) was used as the average particle diameter of the colored resin particles.

The colored resin particles are dispersed in the inkjet ink for textile printing according to the embodiment of the present invention.

The colored resin particles have a function of being readily compatible with water (wettable) when being dispersed as a property of the colored resin particles themselves or by using a dispersant together, a function of preventing the re-aggregation therebetween by electrostatic repulsion (repulsive force) or steric repulsion, and a function of suppressing the occurrence of precipitation.

A known method can be used as a method of dispersing the colored resin particles.

The colored resin particles in the inkjet ink for textile printing according to the embodiment of the present invention contain a urethane resin. The urethane resin may be synthesized by a known method, or a commercially available product may be used.

The urethane resin may have a crosslinking structure.

The crosslinking structure represents a structure obtained using a compound whose number of hydroxyl groups and isocyanate groups as at least one monomer is three or more in total in the molecule.

Examples of the compound whose number of hydroxyl groups and isocyanate groups is three or more in total in the molecule include trimethylolpropane, trimethylolethane, and pentaerythritol.

The urethane resin may further have a urea bond. A resin having a urethane bond and a urea bond is also referred to as a "urethane/urea resin".

Preferable examples of the form of the dye polymer in the present invention include a urethane/urea resin in which a first partial structure containing a urethane bond and a second partial structure containing a urethane bond are bonded by a urea bond.

The weight-average molecular weight (Mw) of the urethane resin is preferably 1,500 or greater, more preferably 2,000 or greater, and even more preferably 5,000 or greater. The weight-average molecular weight (Mw) of the urethane resin is preferably 1,500 or greater from the viewpoint of temporal stability of the particles and inkjet jetting property, and is preferably 30,000 or greater, more preferably 50,000 or greater, and even more preferably 100,000 or greater from the viewpoint of securing the fixing property and dyeing fastness after heating. The molecular weight is preferably 30,000 or greater rom the viewpoint of securing the fixing property and dyeing fastness after heating. The number average molecular weight (Mn) and the weight-average molecular weight (Mw) of the urethane resin can be measured by gel permeation chromatography (GPC).

In this specification, unless otherwise specified, GPC is carried out using HLC-8220 GPC (manufactured by Tosoh Corporation) with TSKgel SuperHZM-H, TSKgel SuperHZ4000, and TSKgel SuperHZ2000 (manufactured by Tosoh Corporation) as columns, and the number average molecular weight (Mn) and the weight-average molecular weight (Mw) are calculated by polystyrene conversion.

The acid value of the urethane resin is preferably 5 to 90 mgKOH/g, more preferably 10 to 80 mgKOH/g, and even more preferably 15 to 70 mgKOH/g.

The acid value is preferably 5 mgKOH/g or greater since in a case where the colored resin particles are used as a dispersion, the dispersibility of the dispersion can be maintained, and the stability of the ink does not decrease. The acid value is preferably 90 mgKOH/g or less since the hydrophilicity of the ink film of the colored resin particle dispersion after thermal fixing does not increase, and the dyeing fastness such as washing resistance and perspiration resistance does not decrease.

The measurement of the acid value of the urethane resin was performed with urethane resin particles produced without adding a dye in the production of the colored resin particles in consideration of the measurement accuracy.

The acid value can be measured according to the indicator titration method of JIS K 1557. The measurement is performed after removal of a neutralizing agent used to neutralize acidic groups. For example, in a case where an organic amine is used as a neutralizing agent, a colored resin particle dispersion or a urethane resin is applied to a glass plate and dried for 24 hours at a temperature of 60°C under reduced pressure of 20 mmHg to volatilize the organic amine. The resulting coating film is dissolved in N-methylpyrrolidone, and the acid value can be measured according to the indicator titration method of JIS K 1557.
760 mmHg equals 101,325 Pa.

The acid value of the colored resin particles is preferably 3 to 80 mgKOH/g, more preferably 5 to 70 mgKOH/g, and even more preferably 10 to 50 mgKOH/g.

The acid value of the colored resin particles can be calculated by multiplying the acid value of the used urethane resin by the weight fraction of the urethane resin in the solid content of the colored resin particles.

In an inkjet textile printing method according to the embodiment of the present invention, a crosslinking agent to be described later can be used in order to further strengthen the adhesiveness between the fabric and the resin and to thus improve the fastness of the image. Accordingly, the resin preferably has a carboxyl group, a hydroxyl group, a sulfonic acid group, an amide group, or the like as a group capable of reacting with the crosslinkable group of the crosslinking agent.

It is also preferable to use no crosslinking agent in the inkjet ink for textile printing. It is also preferable for the colored fine particles of the inkjet ink for textile printing to contain no crosslinking agent. It is also preferable for the resin to have no group capable of reacting with the crosslinkable group of the crosslinking agent.

The urethane resin content in the colored resin particles is preferably 10 to 90 mass%, more preferably 20 to 85 mass%, and even more preferably 25 to 80 mass% to secure color developability and dyeing fastness.

The urethane resin content in the colored resin particles is preferably 5 to 50 mass%, more preferably 10 to 45 mass%, and even more preferably 12 to 40 mass% to secure color developability and texture.

The urethane resin content in the colored resin particles is preferably 5 to 90 mass%, more preferably 10 to 80 mass%, and even more preferably 10 to 45 mass% from the viewpoint of achieving a good balance among color developability, dyeing fastness, and texture.

In the colored resin particles, the mass ratio of the urethane resin content to the dye content (urethane resin content/dye content) is preferably from 0.1 to 10, more preferably from 0.2 to 10, even more preferably from 0.5 to 8.0, and particularly preferably from 1.0 to 6.0 to secure color developability and dyeing fastness.

The mass ratio of the urethane resin content to the dye content (urethane resin content/dye content) is preferably from 0.05 to 1.0, more preferably from 0.1 to 1.0, even more preferably from 0.15 to 1.0, and particularly preferably from 0.15 to 0.5 to secure color developability and texture.

The mass ratio of the urethane resin content to the dye content (urethane resin content/dye content) is preferably from 0.1 to 10, more preferably from 0.1 to 6.0, and even more preferably from 0.15 to 1.0 from the viewpoint of achieving a good balance among color developability, dyeing fastness, and texture.

The colored resin particles in the inkjet ink for textile printing according to the embodiment of the present invention contains at least one type of dye selected from the group consisting of an oil-soluble dye, a disperse dye, and a vat dye (hereinafter, also referred to as "dye" or "specific dye").

In the present invention, the specific dye is not particularly limited, and the following dyes are particularly preferred. "C. I. " is an abbreviation for "color index". Those described with "Disperse" are disperse dyes, and those described as "Solvent" are oil-soluble dyes.
C. I. Disperse Yellow 3, 7, 8, 23, 39, 51, 54, 60, 71, and 86,
C. I. Solvent Yellow 2, 14, 16, 21, 33, 43, 44, 56, 82, 85, 93, 98, 114, 131, 135, 157, 160, 163, 167, 176, 179, 185, and 189,
C. I. Disperse Red 11, 50, 53, 55:1, 59, 60, 65, 70, 75, 93, 146, 158, 190, 190:1, 207, 239, and 240,
C. I. Solvent Red 8, 23, 24, 25, 49, 52, 109, 111, 119, 122, 124, 135, 146, 149, 150, 168, 169, 172, 179, 195, 196, 197, 207, 222, 227, 312, and 313,
C. I. Disperse Blue 3, 5, 19, 26, 26:1, 35, 55, 56, 58, 64, 64:1, 72, 72:1, 81, 81:1, 91, 95, 108, 131, 141, 145, 359, and 360,
C. I. Solvent Blue 3, 4, 5, 35, 36, 38, 44, 45, 59, 63, 67, 68, 70, 78, 83, 97, 101, 102, 104, 105, 111, and 122,
C. I. Disperse Orange 1, 1:1, 5, 7, 20, 23, 25, 25:1, 33, 56, and 76,
C. I. Solvent Orange 3, 14, 54, 60, 62, 63, 67, 86, and 107,
C. I. Disperse Violet 8, 11, 17, 23, 26, 27, 28, 29, 36, and 57,
C. I. Solvent Violet 8, 9, 11, 13, 14, 26, 28, 31, 36, and 59,
C. I. Solvent Green 3, 5, 7, and 28,
C. I. Disperse Brown 2,
C. I. Solvent Brown 53, and
C. I. Solvent Black 3, 5, 7, 27, 29, and 34

The following dyes are particularly preferred as vat dyes.

C. I. Vat Yellow 2, 4, 10, 20, and 33; C. I. Vat Orange 1, 2, 3, 5, 7, 9, 13, and 15; C. I. Vat Red 1, 2, 10, 13, 15, 16, 41, and 61; C. I. Vat Blue 1, 3, 4, 5, 6, 8, 12, 14, 18, 19, 20, 29, 35, and 41; and C. I. Vat Black 1, 8, 9, 13, 14, 20, 25, 27, 29, 36, 56, 57, 59, and 60

In a case where the inkjet ink for textile printing according to the embodiment of the present invention is applied to a black ink, the dye is preferably a compound represented by Formula (M-A).

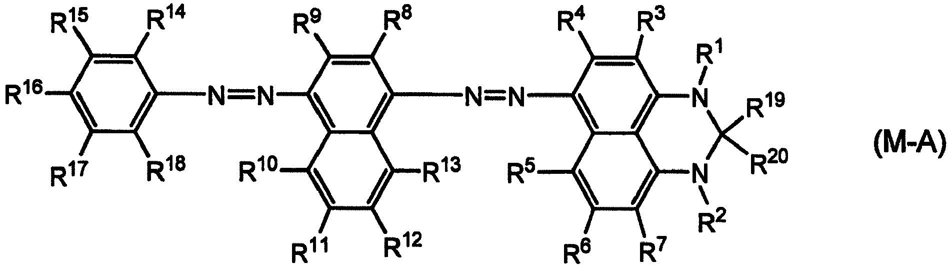

In Formula (M-A), R¹ to R²⁰ each independently represent a hydrogen atom or a substituent.

Examples of the substituent include substituents (preferably substituents selected from the substituent group A1) selected from the substituent group A.

In Formula (M-A), R¹ and R² preferably represent a hydrogen atom.

R³ to R¹⁸ preferably represent a hydrogen atom.

R¹⁹ and R²⁰ each independently represent preferably an alkyl group, more preferably an alkyl group having 1 to 30 carbon atoms, even more preferably an alkyl group having 1 to 10 carbon atoms, particularly preferably an alkyl group having 1 to 6 carbon atoms, and most preferably a methyl group.

In a case where the inkjet ink for textile printing according to the embodiment of the present invention is applied to a black ink, the dye is preferably C. I. Solvent Black 3.

A commercially available product can be used as C. I. Solvent Black 3, and examples thereof include Oil Black HBB and Oil Black 860 (all are manufactured by Orient Chemical Industries Co., Ltd.).

The dye content in the colored resin particles is preferably 10 to 90 mass%, more preferably 30 to 85 mass%, and even more preferably 50 to 80 mass% from the viewpoint of exhibiting high color developability. The dye content is preferably 10 to 90 mass%, more preferably 15 to 80 mass%, even more preferably 20 to 75 mass%, and particularly preferably 25 to 70 mass% to secure color developability and dyeing fastness.

In the colored resin particles of the inkjet ink for textile printing according to the embodiment of the present invention, the specific dye is present while being coated with a urethane resin. It is preferable that the polymer and the dye are not covalently bonded. Since the polymer and the dye are not covalently bonded, the dye has high mobility, and a high color density can be exhibited.

The colored resin particles preferably have a form in which a dye is encapsulated in a polymer, that is, a core-shell structure. A core is composed of the specific dye, and a shell is composed of the urethane resin.

The core-shell structure can be confirmed by a transmission electron microscope (TEM).

The colored resin particle content in the inkjet ink for textile printing is preferably 0.5 to 30 mass%, more preferably 1.0 to 25 mass%, even more preferably 2.0 to 20 mass%, and particularly preferably 3.0 to 20 mass% to secure jetting stability and color developability.

The colored resin particles are preferably used as a dispersion. The method of manufacturing a colored resin particle dispersion is not particularly limited, and examples thereof include the following method. In the presence or absence of an organic solvent containing no active hydrogen-containing group in the molecule (for example, acetone, methyl ethyl ketone, tetrahydrofuran, or N, N-dimethylformamide), a urethanation reaction of a polyisocyanate having two or more isocyanate groups in one molecule, a polyol having two or more hydroxyl groups in one molecule, and an acidic group-containing polyol or salt thereof is performed by a one-shot method or multistage method to synthesize a urethane resin, and the above urethane resin is optionally neutralized with a neutralizing agent. Then, a dye is added thereto, and water is added dropwise to the place where the reaction liquid is strongly stirred. After that, the solvent is optionally removed to obtain a colored resin particle dispersion.

As a method of manufacturing a colored resin particle dispersion, the following method can also be conducted: a polyisocyanate having two or more isocyanate groups in one molecule, a polyol having two or more hydroxyl groups in one molecule, and an acidic group-containing polyol or salt thereof are reacted under the condition where the isocyanate amount is excessive to synthesize a prepolymer, a dye is added thereto, the resulting mixture is dispersed in water, and then a chain extender is added to provide a colored resin particle dispersion.

### (Polyisocyanate)

The polyisocyanate which can be used in the method of manufacturing a colored resin particle dispersion is not particularly limited as long as it is a polyisocyanate containing two or more isocyanate groups in one molecule. Examples of the polyisocyanate include aromatic, aliphatic, and alicyclic organic diisocyanates such as tolylene diisocyanate, diphenylmethane diisocyanate, cyclohexane diisocyanate, tolylene diisocyanate, hexamethylene diisocyanate (HDI), trimethylhexane diisocyanate, 1,5-naphthalene diisocyanate, xylylene diisocyanate, 2,6-diisocyanate methyl caproate, isophorone diisocyanate (IPDI), methylcyclohexane-2,4-(or 2,6-)diisocyanate, and 4,4'-methylenebis(cyclohexyl isocyanate), multimers containing a polyfunctional isocyanate group such as burettes and isocyanurates thereof, or the isocyanates alone or mixtures thereof.

Particularly, an aliphatic and/or alicyclic organic diisocyanate compound is preferred from the viewpoint of weather fastness, and specifically, aliphatic and alicyclic diisocyanates such as HDI, IPDI, dodecane diisocyanate, cyclohexane diisocyanate, and dicyclohexylmethane diisocyanate, or mixtures of the isocyanates are more preferred.

### (Polyol)

The polyol which can be used in the method of manufacturing a colored resin particle dispersion is not particularly limited as long as it contains two or more hydroxyl groups in one molecule. For example, a polymer polyol or a low-molecular-weight polyol can be used. Examples of the polymer polyol include polyether polyol, polyester polyol, and polycarbonate polyol.

The polyether polyol is not particularly limited, and examples thereof include polyethylene glycol, polypropylene glycol, polytetramethylene glycol, and random copolymers or block copolymers of an ethylene oxide and a propylene oxide; and an ethylene oxide and a butylene oxide. A polyether polyester polyol or the like having an ether bond and an ester bond can also be used.

The polyester polyol is not particularly limited, and examples thereof include polyethylene adipate polyol, polybutylene adipate polyol, polyethylene butylene adipate polyol, polyhexamethylene isophthalate adipate polyol, polyethylene succinate polyol, polybutylene succinate polyol, polyethylene sebacate polyol, polybutylene sebacate polyol, poly-ε-caprolactone polyol, and poly(3-methyl-1,5-pentylene adipate)polyol.

Examples of the polycarbonate polyol include linear aliphatic polycarbonate polyols, branched aliphatic polycarbonate polyols, polycarbonate polyols having an alicyclic structure in the main chain, and polycarbonate polyols having an aromatic ring in the main chain.

The low-molecular-weight polyol is not particularly limited, and a low-molecular-weight diol can be used. Examples thereof include aliphatic diols having 2 to 9 carbon atoms such as ethylene glycol, 1,3-propanediol, 2-methyl-1,3-propanediol, 2,2-dimethyl-1,3-propanediol, 2-butyl-2-ethyl-1,3-propanediol, 1,4-butanediol, 1,5-pentanediol, 3-methyl-1,5-pentanediol, 1,6- hexanediol, 1,9-nonanediol, 2-methyl-1,8-octanediol, diethylene glycol, triethylene glycol, and tetraethylene glycol; and diols having an alicyclic structure having 6 to 12 carbon atoms such as 1,4-cyclohexanedimethanol, 1,3-cyclohexanedimethanol, 1,4-cyclohexanediol, 1,4-bis(hydroxyethyl)cyclohexane, 2,7-norbomanediol, tetrahydrofuran dimethanol, and 2,5-bis (hydroxymethyl)-1,4-dioxane. Low-molecular-weight polyhydric alcohols such as trimethylol propane, pentaerythritol, and sorbitol can also be used as the low-molecular-weight polyol.

Examples of the polyol include compounds containing two or more hydroxyl groups, such as linear aliphatic glycols such as ethylene glycol, propylene glycol, 1,3-propanediol, 1,3-butanediol, 1,4-butanediol, 1,5-pentanediol, 1,2-pentanediol, 3-methyl-1,5-pentanediol, 1,6-hexanediol, 1,2-hexanediol, diethylene glycol, triethylene glycol, tetraethylene glycol, dipropylene glycol, tripropylene glycol, polyethylene glycol, polypropylene glycol, 1,8-octanediol, 1,2-octanediol, and 1,9-nonanediol; aliphatic branched glycols such as neopentyl glycol, 3-methyl-1,5-pentanediol, 2-methyl-1,3-propanediol, 2,2-dimethyl-1,3-propanediol, 2-butyl-2-ethyl-1,3-propanediol, 2,2-dibutyl-1,3-propanediol, and 2-methyl-1,8-octanediol; alicyclic glycols such as 1,4-cyclohexanediol and 1,4-cyclohexanedimethanol; and multifunctional glycols such as glycerin, trimethylolethane, trimethylolpropane,tributylolpropane, pentaerythritol, and sorbitol, and these can be used alone or in combination of two or more types thereof. A copolymer of two or more types thereof can also be used.

### (Acidic Group-Containing Polyol or Salt Thereof)

The acidic group-containing polyol which can be used in the method of manufacturing a colored resin particle dispersion is a compound having two or more hydroxyl groups and one or more acidic groups in one molecule. It is used for introducing a carboxylate group or a sulfonate group in order to self-emulsify the colored resin in water and to impart the dispersion stability of the colored resin particle dispersion. The carboxyl group-containing polyol is not particularly limited. Examples thereof include 2,2-dimethylolpropionic acid (DMPA), 2,2-dimethylolbutanoic acid, 2,2-dimethylolheptanoic acid, and 2,2-dimethyloloctanoic acid. Examples of the sulfone group-containing polyol include sulfonic acid diol {3-(2,3-dihydroxypropoxy)-1-propanesulfonic acid}, sulfamic acid diol {N,N-bis(2-hydroxylalkyl)sulfamic acid}, and alkylene oxide adducts thereof. The salt of the carboxyl group and/or sulfone group-containing polyols is not particularly limited, and examples thereof include ammonium salts, amine salts [primary amine (primary monoamines such as methylamine, ethylamine, propylamine, and octylamine) salts, secondary monoamine (dimethylamine, diethylamine, and dibutylamine) salts, and tertiary monoamine (aliphatic tertiary monoamines such as trimethylamine, triethylamine triethanolamine, N-methyldiethanolamine, and N,N-dimethylethanolamine; heterocyclic tertiary monoamines such as N-methylpiperidine and N-methylmorpholine; and aromatic ring-containing tertiary monoamines such as benzyldimethylamine, α-methylbenzyldimethylamine, and N-dimethylaniline) salts having 1 to 12 carbon atoms], alkali metal (sodium, potassium, and lithium cation) salts, and combinations of two or more thereof.

In a case where the polyol is not a salt, but a carboxyl group and/or sulfone group-containing polyol, the carboxyl group and/or the sulfone group can be neutralized using a neutralizing agent to form a carboxylate group and/or a sulfonate group.

### (Neutralizing Agent)

The neutralizing agent is not particularly limited, and examples thereof include alkaline compounds which can neutralize the carboxyl group and/or the sulfone group. Examples thereof include ammonia, amines [primary amines (primary monoamines such as methylamine, ethylamine, propylamine, and octylamine), secondary monoamines (dimethylamine, diethylamine, and dibutylamine), tertiary monoamines (aliphatic tertiary monoamines such as trimethylamine, triethylamine triethanolamine, N-methyldiethanolamine, and N,N-dimethylethanolamine; heterocyclic tertiary monoamines such as N-methylpiperidine and N-methylmorpholine; and aromatic ring-containing tertiary monoamines such as benzyldimethylamine, α-methylbenzyldimethylamine, and N-dimethylaniline) having 1 to 12 carbon atoms], alkali metals (sodium, potassium, and lithium cation), alkali metal hydroxides, and combinations of two or more thereof.

### (Chain Extender)

The chain extender is not particularly limited, and examples thereof include water, short chain diols such as ethylene glycol, 1,3-propanediol, and 1,4-butanediol, and polyamines such as hydrazine, ethylenediamine, diethyltriamine, triethylenetetramine, tetraethylenepentamine, pentaethylenehexamine, propylenediamine, hexamethylenediamine, and cyclohexylenediamine. These may be used alone or in combination of two or more types thereof.

### <(d) Crosslinking Agent>

The inkjet ink for textile printing according to the embodiment of the present invention may further contain a crosslinking agent.

As described above, a crosslinking agent is preferably used in the inkjet textile printing method according to the embodiment of the present invention in order to further strengthen the adhesiveness between the fabric and the resin and to thus improve the fastness of the image. The resin and the constituent component of the fabric are preferably bonded by the crosslinking agent.

The crosslinking agent is preferably a compound having at least two crosslinkable groups.

Examples of the crosslinkable group of the crosslinking agent include an isocyanate group, a blocked isocyanate group, an epoxy group, an oxetane group, an oxazoline group, and a carbodiimide group. The functional group with which the crosslinkable group reacts is preferably a functional group having active hydrogen such as a carboxyl group, a hydroxyl group, a sulfonic acid group, and an amide group, and the component such as the solvent or the resin in the ink of the present application preferably has a functional group with which the crosslinkable group reacts.

Examples of the crosslinking agent include blocked isocyanate-based compounds, oxazoline-based compounds, and carbodiimide compounds. Among these, blocked isocyanate-based compounds in which a trimethylolpropane (TMP) adduct or isocyanurate of hexamethylene diisocyanate (HDI), hydrogenated xylylene diisocyanate (H6XDI), isophorone diisocyanate (IPDI), or dicyclohexylmethane diisocyanate (H12MDI) is blocked with a blocking agent are preferable. As the blocking agent, diethyl malonate (DEM), diisopropylamine (DIPA), 1,2,4-triazole (TRIA), 3,5-dimethylpyrazole (DMP), or butanone oxime (MEKO) can be preferably used in view of a dissociation temperature of the blocking agent. These blocked isocyanate-based compounds can also be used as an oligomer in which a part of the isocyanate group thereof is reacted with a polyol, a polycarbonate, a polyester, a polyether, or the like.

The dissociation temperature of the blocked isocyanate is preferably as low as possible from the viewpoint of crosslinking efficiency, but is preferably as high as possible from the viewpoint of storage stability. The dissociation temperature can be selected by appropriately balancing the crosslinking efficiency and the storage stability. The dissociation temperature is preferably in the range of 90°C to 180°C, more preferably in the range of 90°C to 120°C, and particularly preferably in the range of 110°C to 120°C.

The crosslinking agent is preferably blended with the inkjet ink for textile printing as what is water-soluble or self-emulsifiable by giving a hydrophilic group. In this state, the viscosity of the blended ink can be lowered, and excellent redispersibility can be obtained.

The crosslinking agent is preferably present in the form of particles in the inkjet ink for textile printing according to the embodiment of the present invention. The crosslinking agent having a particle form is referred to as "crosslinking agent particles".

The crosslinking agent particles preferably have a volume average particle diameter (MV) of 200 nm or less from the viewpoint of improving the jetting property in an inkjet process.

The volume average particle diameter can be measured in the same manner as in the case of the colored resin particles described above.

The crosslinking agent particles are not particularly limited, and examples thereof include ELASTRON BN-77 (blocked isocyanate, volume average particle diameter: 19 nm, dissociation temperature: 120°C or higher, manufactured by DKS Co. Ltd.), ELASTRON BN-27 (blocked isocyanate, particle diameter: 108 nm, dissociation temperature: 180°C or higher, manufactured by DKS Co. Ltd.), DURANATE WM44-70G (blocked isocyanate, volume average particle diameter: 42 nm, dissociation temperature: about 90°C, manufactured by Asahi Kasei Corporation), and TRIXENE AQUA BI200 (blocked isocyanate, volume average particle diameter: 94 nm, dissociation temperature: 110°C to 120°C, manufactured by BAXENDEN).

The crosslinking agent content in the inkjet ink for textile printing is preferably 0.1 to 10 mass%, more preferably 0.5 to 8 mass%, and even more preferably 1 to 5 mass% since it is necessary to blend a sufficient amount of crosslinking functional groups for reacting the resin with the fabric.

### <(e) Pigment>

The inkjet ink for textile printing according to the embodiment of the present invention preferably further contains a pigment. The pigment is preferably dispersed in the inkjet ink for textile printing according to the embodiment of the present invention.

As described above, the resin preferably forms a film on the fabric in the inkjet textile printing method according to the embodiment of the present invention since the pigment is further dispersed in the film depending on colors, and it is thus possible to adjust the hue or to increase the color density. Only one type of pigment may be used, or two or more types of pigments may be used.

The pigment which can be used in the present invention is not particularly limited, and is preferably at least one type selected from
Carbon Black
Aniline Black
C. I. Pigment Yellow 3, 12, 53, 55, 74, 81, 83, 93, 94, 95, 97, 98, 100, 101, 104, 108, 109, 110, 117, 120, 128, 138, 153, 155, 180, and 185,
C. I. Pigment Red 112, 114, 122, 123, 146, 149, 166, 168, 170, 172, 177, 178, 179, 185, 190, 193, 202, 206, 209, and 219,
C. I. Pigment Violet 19 and 23,
C. I. Pigment Orange 36, 43, and 64,
C. I. Pigment Blue 15, 15:1, 15:2, 15:3, 15:4, 15:6, 16, 17:1, 56, 60, and 63, or
C. I. Pigment Green 36.

In a case where the inkjet ink for textile printing according to the embodiment of the present invention contains a pigment, the pigment content in the inkjet ink for textile printing is preferably 0.5 to 10 mass%, more preferably 0.5 to 8 mass%, and even more preferably 0.5 to 5 mass%.

In the present invention, an aqueous dispersion of a pigment (also referred to as "aqueous pigment dispersion") in which a pigment is dispersed in water using a dispersant can also be used in the preparation of the inkjet ink for textile printing. For example, the pigment dispersion described in JP2012-007148A can be used as the aqueous pigment dispersion.

A self-dispersing pigment can also be used as the pigment.

The self-dispersing pigment is a pigment which is dispersible in water without using a dispersant. Examples of the self-dispersing pigment include those in which at least one of hydrophilic groups such as a carbonyl group, a hydroxyl group, a carboxyl group, a sulfo group, and a phosphoric acid group or salts thereof is introduced to the surface of the pigment by a chemical bond, either directly or via another group.

The self-dispersing pigment is preferably self-dispersing carbon black.

Examples of the useable self-dispersing pigment include commercially available products such as self-dispersing carbon black CAB-O-JET 200, 300, and 400 (all manufactured by Cabot Corporation), BONJET CW-1 (500 µmol/g, as a carboxy group) and CW-2 (470 µmol/g, as a carboxy group) (all manufactured by Orient Chemical Industries Co., Ltd.), and Aqua-Black 162 (about 800 µmol/g, as a carboxyl group) of Tokai Carbon Co., Ltd.

As the pigment, either an aqueous dispersion of a pigment obtained by dispersing a pigment in water using a dispersant or a self-dispersing pigment can be preferably used, and as a black pigment, a self-dispersing pigment is preferred.

### <Wax>

The inkjet ink for textile printing according to the embodiment of the present invention contains a wax. The friction resistance of a surface of an ink film to be obtained can be reduced, and the frictionality can be improved.

The wax is preferably present in the form of particles in the inkjet ink for textile printing according to the embodiment of the present invention. The wax having a particle form is referred to as "wax particles".

A dispersion in which a wax is dispersed in water is preferably used as the wax particles. As the wax, polyethylene (also expressed as olefin), paraffin, and carnauba (also expressed as ester) are preferred, and carnauba is more preferred from the viewpoint of improving the frictionality and the color density. These may be used alone or in combination of two or more types thereof. Two or more types may be used as particles of the mixture.

Regarding the dispersion form of the wax particles, the wax particles are preferably either anionic or nonionic, and are particularly preferably nonionic. In the present invention, the wax particles are preferably nonionic since it is thought that the wax is likely to be unevenly distributed on the surface of the ink film, but the frionality is effectively improved. Generally, in a case where the inkjet ink for textile printing contains a colorless component other than the coloring agent, the interaction between the coloring agent and the pretreatment agent on the fabric may be inhibited, and the color density may be deteriorated. It is presumed that the deterioration of the color density can be suppressed using nonionic wax particles.

The melting point of the wax is preferably in the range of 60°C to 120°C, and more preferably 60°C to 100°C from the viewpoint of improving stability and frictionality. It is possible to improve the stability of the printing ink by increasing the melting point, and not increasing the melting point higher than necessary is effective in improving the frictionality.

The melting point of the wax can be measured by a general melting point measuring machine.

The volume average particle diameter (MV) of the wax particles is preferably 0.3 µm or less, more preferably 0.2 µm or less, and particularly preferably 0.1 µm or less from the viewpoint of improving the jetting property in an inkjet process.

The volume average particle diameter can be measured in the same manner as in the case of the colored resin particles described above.

The wax content is preferably 0.1 to 10 mass%, more preferably 0.5 to 8 mass%, and even more preferably 1 to 5 mass% in the inkjet ink for textile printing.

The wax particles are not particularly limited, and a commercially available product may be used. Examples thereof include Polylon L-787 (manufactured by Chukyo Yushi Co., Ltd., polyethylene, nonionic, melting point: 102°C, volume average particle diameter: 0.1 µm), Hydrin-703 (manufactured by Chukyo Yushi Co., Ltd., paraffin, anion, melting point: 75°C, volume average particle diameter: 0.1 µm), R108 (manufactured by Chukyo Yushi Co., Ltd., paraffin, nonionic, melting point: 66°C, volume average particle diameter: 0.2 µm), and cellosol 524 (manufactured by Chukyo Yushi Co., Ltd., carnauba, nonionic, melting point: 83°C, volume average particle diameter 0.07 µm). More preferred are R108 (manufactured by Chukyo Yushi Co., Ltd., paraffin, nonionic, melting point: 66°C, volume average particle diameter: 0.2 µm) and cellosol 524 (manufactured by Chukyo Yushi Co., Ltd., carnauba, nonionic, melting point: 83°C, volume average particle diameter 0.07 µm), and particularly preferred is cellosol 524 (manufactured by Chukyo Yushi Co., Ltd., carnauba, nonionic, melting point: 83°C, volume average particle diameter 0.07 µm).

### <Other Components>

The inkjet ink for textile printing according to the embodiment of the present invention may contain components other than those described above.

Examples of other components include coloring agents other than the above dyes and pigments, organic solvents, surfactants, pH adjusters, fluorescent brighteners, surface tension adjusters, antifoaming agents, antidrying agents, lubricants, thickeners, ultraviolet absorbers, antifading agents, antistatic agents, matting agents, antioxidants, resistivity modifiers, rust inhibitors, inorganic pigments, reduction inhibitors, preservatives, fungicides, and chelating agents.

The surfactant is not particularly limited, and examples thereof are as follows.

### (c) Nonionic Acetylene-Based Surfactant Exhibiting HLB of 3 to 8

The ink according to the embodiment of the present invention contains a nonionic acetylene-based surfactant exhibiting an HLB of 3 to 8 (hereinafter, also referred to as "(c) component" or "(c) surfactant").

The HLB of (c) component of the present invention is 3 to 8, preferably 4 to 6, and more preferably 4. Hydrophile-lipophile balance (HLB) is an index that represents a hydrophilic-lipophilic balance, and is described in Handbook of Surfactants (p. 234, KOGAKUTOSHO, etc.). The HLB is in the range of 3 to 8 since both the continuous jetting property and the intermittent jetting property can be satisfied.

In a case where the HLB is less than 3, the solubility in an aqueous ink may be lowered, and a sufficient effect may not be obtained. The HLB is preferably 3 or greater.

According to the present invention, the continuous jetting property and the intermittent jetting property of the ink containing the colored resin particles are dramatically improved. Surprisingly, not only the continuous jetting property but also the intermittent jetting property is improved by using the surfactant in combination in the present invention. Depending on surfactants, the wettability on a normal inkjet nozzle surface may be adjusted to improve the continuous jetting property. However, a dramatic improvement is also seen in the intermittent jetting property, which is usually considered to be improved mainly by adding a water-soluble organic solvent or a moisturizer. The reason for this is presumed to be that a hydrophobic surfactant exhibiting a relatively low HLB gathers at an interface between the air and the ink on the nozzle surface during an intermittent time period (when jetting is stopped) to form a shield suppressing drying of the ink.

In the present invention, (c) surfactant is a nonionic acetylene-based surfactant. Surfactants are classified into anionic surfactants, cationic surfactants, and nonionic surfactants from the viewpoint of charge, and a nonionic surfactant is used in the present invention in view of the stability of the colored resin particle dispersion. In addition, surfactants are classified into acetylene-based surfactants and non-acetylene-based surfactants from the viewpoint of structure. In the present invention, acetylene-based surfactant is used from the viewpoint of continuous discharge and intermittent discharge.

In the present invention, (c) surfactant is an acetylene-based surfactant, and specifically, a surfactant having an acetylene bond.

Examples of (c) surfactant include linear surfactants and branched (geminal) surfactants. Branched surfactants are more preferred since these rapidly produce a response from the viewpoint of handling a high-speed inkjet process.

The content of (c) surfactant is preferably 0.1 to 2.0 mass%, and more preferably 0.5 to 2.0 mass% with respect to the total mass of the ink.

From the viewpoint of sufficiently obtaining the continuous jetting property and the intermittent jetting property, the surfactant content is preferably 0.1 mass% or greater with respect to the total mass of the ink, and from the viewpoint of sufficiently obtaining the continuous jetting property and the intermittent jetting property, the surfactant content is preferably 2.0 mass% or less with respect to the total mass of the ink.

Examples of the surfactant are not particularly limited, and include Surfynol DF110D (HLB3, manufactured by Nissin Chemical Co., Ltd.), Surfynol 104E (HLB4, manufactured by Nissin Chemical Co., Ltd.), Surfynol 104H (HLB4, manufactured by Nissin Chemical Co., Ltd.), Surfynol 104A (HLB4, manufactured by Nissin Chemical Co., Ltd.), Surfynol 104PA (HLB4, manufactured by Nissin Chemical Co., Ltd.), Surfynol 104PG50 (HLB4, manufactured by Nissin Chemical Co., Ltd.), Surfynol 104S (HLB4, Nissin Chemical Co., Ltd.), Surfynol 420 (HLB4, manufactured by Nissin Chemical Co., Ltd.), Surfynol 82 (HLB4, manufactured by Nissin Chemical Co., Ltd.), Surfynol SE (HLB6, manufactured by Nissin Chemical Co., Ltd.), Surfynol SE-F (HLB6, manufactured by Nissin Chemical Co., Ltd.), Surfynol 61 (HLB6, manufactured by Nissin Chemical Co., Ltd.), Surfynol 440 (HLB8, manufactured by Nissin Chemical Co., Ltd.), and Surfynol 2502 (HLB8, Nissin Chemical Co., Ltd.). More preferred are Surfynol 104E (HLB4, manufactured by Nissin Chemical Co., Ltd.), Surfynol 104H (HLB4, manufactured by Nissin Chemical Co., Ltd.), Surfynol 104A (HLB4, manufactured by Nissin Chemical Co., Ltd.), Surfynol 104PA (HLB4, manufactured by Nissin Chemical Co., Ltd.), Surfynol 104PG50 (HLB4, manufactured by Nissin Chemical Co., Ltd.), Surfynol 104S (HLB4, Nissin Chemical Co., Ltd.), Surfynol 420 (HLB4, manufactured by Nissin Chemical Co., Ltd.), Surfynol 82 (HLB4, manufactured by Nissin Chemical Co., Ltd.), Surfynol SE (HLB6, manufactured by Nissin Chemical Co., Ltd.), Surfynol SE-F (HLB6, manufactured by Nissin Chemical Co., Ltd.), and Surfynol 61 (HLB6, manufactured by Nissin Chemical Co., Ltd.), and particularly preferred are Surfynol 104E (HLB4, manufactured by Nissin Chemical Co., Ltd.), Surfynol 104H (HLB4, manufactured by Nissin Chemical Co., Ltd.), Surfynol 104A (HLB4, manufactured by Nissin Chemical Co., Ltd.), Surfynol 104PA (HLB4, manufactured by Nissin Chemical Co., Ltd.), Surfynol 104PG50 (HLB4, manufactured by Nissin Chemical Co., Ltd.), Surfynol 104S (HLB4, Nissin Chemical Co., Ltd.), Surfynol 420 (HLB4, manufactured by Nissin Chemical Co., Ltd.), and Surfynol 82 (HLB4, manufactured by Nissin Chemical Co., Ltd.).

### <Method of Preparing Inkjet Ink for Textile Printing>

A method of preparing the inkjet ink for textile printing according to the embodiment of the present invention is not particularly limited. Examples thereof include a method including: obtaining a colored resin particle dispersion; and mixing the colored resin particle dispersion with an aqueous organic solvent, water, and an optional surfactant to prepare an inkjet ink for textile printing.

Since the inkjet ink for textile printing according to the embodiment of the present invention can be directly printed on a fabric not coated with a pretreatment agent, it is useful from the viewpoint of workability.

Regarding the inkjet ink for textile printing according to the embodiment of the present invention, the surface tension of the ink at 25°C is preferably adjusted to 20 mN/m to 70 mN/m, and more preferably 25 mN/m to 60 mN/m. In the inkjet ink for textile printing according to the embodiment of the present invention, the ink viscosity is preferably adjusted to 40 mPa·s or less, more preferably 30 mPa·s or less, and particularly preferably 20 mPa·s or less. The viscosity is measured by controlling the temperature to 25°C using an E-type rotating viscometer.

The surface tension and the viscosity can be adjusted by adding various additives such as a viscosity adjuster, a surface tension adjuster, a resistivity modifier, a film conditioning agent, an ultraviolet absorber, an antioxidant, an antifading agent, a fungicide, a rust inhibitor, a dispersant, and a surfactant.

### [Ink Cartridge]

An ink cartridge according to the embodiment of the present invention is filled with the foregoing inkjet ink for textile printing according to the embodiment of the present invention.

### [Ink Set]

A clearer image is obtained in multicolor printing in a case where an ink set containing the inkjet ink for textile printing according to the embodiment of the present invention is used. The ink set preferably contains at least one inkjet ink for textile printing according to the embodiment of the present invention.

The ink set preferably contains at least one selected from a black ink, a cyan ink, a magenta ink, or a yellow ink, and more preferably contains all of the black ink, the cyan ink, the magenta ink, and the yellow ink. In a case where at least the black ink among the inks is the inkjet ink for textile printing according to the embodiment of the present invention, particularly excellent image clarity is obtained.

### [Inkjet Textile Printing Method]

An inkjet textile printing method according to the embodiment of the present invention includes a step of directly printing the inkjet ink for textile printing according to the embodiment of the present invention on a fabric by an inkjet method.

In the inkjet textile printing method according to the embodiment of the present invention, the fabric may be pretreated with an aqueous pretreatment liquid containing an aggregating agent.

That is, the inkjet textile printing method according to the embodiment of the present invention may have a pretreatment step of applying an aqueous pretreatment liquid containing an aggregating agent to a fabric to obtain a pretreated fabric.

In the present invention, "directly printing" an inkjet ink for textile printing on a fabric by an inkjet method refers to a case in which a transfer step is not required, and a step of applying a printing paste is not required, so that the inkjet ink for textile printing is directly printed on the fabric.

The inkjet textile printing method according to the embodiment of the present invention is a simple method without producing waste water and waste materials such as transfer paper and is useful.

### (Pretreatment Step)

The pretreatment step in the second aspect is a step of obtaining a pretreated fabric by applying an aqueous pretreatment liquid containing an aggregating agent to a fabric. The method for applying an aqueous pretreatment liquid to the fabric is not particularly limited, and examples thereof include a coating method, a padding method, an inkjet method, a spraying method, and a screen printing method.

The aggregating agent contained in the aqueous pretreatment liquid is not particularly limited as long as it acts to aggregate an aqueous dispersion of a dye, a resin, or a pigment. The aggregating agent is preferably at least one type selected from organic acids, polyvalent metal salts, and cationic compounds.

Particularly, in a case where the aggregating agent is a cationic compound or a polyvalent metal salt and the colored resin particles have an anionic group (preferably an acidic group), a high-concentration colored fabric can be obtained by printing through the inkjet textile printing method. The reason for this is thought to be that the pretreated cationic compound or polyvalent metal salt aggregates when coming into contact with the ink containing colored resin particles having an anionic group, and thus stays on a surface of the fabric, and as a result, the amount of the dye present on the surface is increased and the concentration can be increased. The aggregating agent is more preferably a cationic compound.

### «Polyvalent Metal Salt»

The polyvalent metal salt is a compound composed of a di- or higher-valent metal ion and an anion. Specific examples thereof include calcium chloride, calcium nitrate, calcium sulfate, calcium acetate, calcium hydroxide, calcium carbonate, magnesium chloride, magnesium acetate, magnesium sulfate, magnesium carbonate, barium sulfate, barium chloride, zinc sulfide, zinc carbonate, and copper nitrate.

### <<Cationic Compound>>

The cationic compound is not particularly limited, and may be a low-molecular-weight compound or a polymer compound.

Examples of the low-molecular-weight cationic compound include (2-hydroxyethyl)trimethylammonium chloride, benzoylcholine chloride, benzyltriethylammonium chloride, trimethylacetohydrazide ammonium chloride, 1-butyl-1-methylpyrrolidinium chloride, 3-hydroxy-4-(trimethylammonio)butyrate hydrochloride, glycidyltrimethylammonium chloride, and L-carnitine hydrochloride.

Examples of the cationic polymer compound include water-soluble cationic polymers which are positively charged in water, such as polyallylamine or derivatives thereof, amine-epihalohydrin copolymers, or other quaternary ammonium salt type cationic polymers. In some cases, a water-dispersible cationic polymer can also be used.

Aggregating agents may be used alone or in combination of two or more types thereof.

The aqueous pretreatment liquid may contain, for example, a surfactant, a resin, and the like other than water and an aqueous organic solvent.

### <Heat Treatment Step>

The inkjet textile printing method according to the embodiment of the present invention preferably further includes a heat treatment step. Particularly, a resin film is easily formed by performing the heat treatment step after printing on the fabric.

The heat treatment step is preferably performed by heating the colored fabric.

The temperature in the heat treatment step is preferably 100°C to 220°C, and more preferably 130°C to 200°C. The heating time in the heat treatment step is preferably 20 seconds to 300 seconds, more preferably 30 to 240 seconds, and even more preferably 40 to 180 seconds.

### <Post-Treatment>

In the fabric colored with the inkjet ink for textile printing according to the embodiment of the present invention, a padding treatment is optionally performed on the entire surface of the colored fabric with a post-treatment agent, and thus it is possible to obtain a colored fabric having further improved soft texture and fastness (particularly rub resistance). Examples of the post-treatment agent for softening include a cationic surfactant, an anionic surfactant, a nonionic surfactant, a dimethyl silicone oil, an amino silicone oil, a carboxy-modified silicone oil, a hydroxy-modified silicone oil, a fatty acid, a fatty acid amide, a mineral oil, a vegetable oil, an animal oil, and a plasticizer.

Examples of the post-treatment agent for improving the slipperiness of the colored fabric surface include a metallic soap, a paraffin wax, a carnauba wax, a microcrystalline wax, a dimethyl silicone oil, an amino silicone oil, a carboxy-modified silicone oil, and a hydroxy-modified silicone oil.

In the padding treatment, the post-treatment agent is emulsified, thermally emulsified, or dispersed in a water solvent by stirring with a mixer. In the resulting material, a colored fabric is immersed. The fabric is squeezed and dried by a mangle or the like, and heat-treated.

In addition, the rub resistance of a colored fabric can be improved by blending a small amount of a resin emulsion as a fixing agent in the post-treatment agent. The blending amount of the resin emulsion with respect to the post-treatment agent is preferably less than 5% since the soft texture of the colored fabric is not easily impaired.

The resin emulsion to be blended as a fixing agent in the post-treatment agent is not particularly limited, and an acrylic acid ester resin emulsion, a urethane resin emulsion, an ethylene-vinyl acetate copolymer resin (EVA resin) emulsion, a silicone-acrylic resin emulsion, a polyester resin emulsion, or the like can be used. In order to soften the texture of the colored fabric, the glass transition point of these resin emulsions is preferably 0°C or lower.

### <Fabric>

The inkjet textile printing method according to the embodiment of the present invention can be applied to various types of fabrics. Examples of fabrics (fiber type) include synthetic fibers such as nylon, polyester, and acrylonitrile, semisynthetic fibers such as acetate and rayon, natural fibers such as cotton, silk, and wool, mixed fibers thereof, woven fabrics, knitted fabrics, and nonwoven fabrics.

The effects of the present invention are remarkably exhibited in a case where the inkjet textile printing method according to the embodiment of the present invention is applied to a fabric (specifically, cotton, polyester, and cotton-polyester blend) including at least one selected from cotton or polyester among the above fabrics.

Examples of clothing items include T-shirts, trainers, jerseys, pants, sweatsuits, dresses, and blouses. It is also suitable for bedding, handkerchiefs, and the like.

### Examples

### [Reference Example 1]

### (Production of Colored Resin Particle Dispersion (A1))

175 parts by mass of poly(3-methylpentyladipate)diol (number average molecular weight: 2,000), 28.7 parts by mass of 2,2-dimethylolpropionic acid (DMPA), 118 parts by mass of isophorone diisocyanate (IPDI), and 214 parts by mass of acetone were put into a sealed reaction vessel comprising a thermometer and a stirrer, and the inside of the reaction system was substituted by a nitrogen gas, followed by a reaction at 80°C for 6 hours under stirring to obtain a urethane prepolymer. The obtained acetone solution was cooled to 40°C, and 22.7 parts by mass (1.05 equivalents/carboxyl group) of triethylamine was added. Next, 100 parts by mass of C. I. Solvent Black 3 (trade name: Oil Black 860, manufactured by Orient Chemical Industries Co., Ltd.) (dye B1, black) was added under stirring. Next, a solution obtained by dissolving 6.4 parts by mass of diethylenetriamine in 650 parts by mass of water was added to the acetone solution. After emulsification and a chain elongation reaction, the acetone was distilled off at 30°C to 40°C under reduced pressure, and the concentration was adjusted by water to obtain a colored resin particle dispersion (A1) having a solid content of 35% and a viscosity of 480 cP/25°C.

1 Pa·s equals 1,000 cP.

### (Preparation of Inkjet Ink for Textile Printing 1)

The colored resin particle dispersion (A1) obtained as above (20 parts by mass), glycerin (10 parts by mass), propylene glycol (10 parts by mass), BYK-348 (manufactured by BYK JAPAN KK) (0.5 parts by mass), and water (59.5 parts by mass) were mixed and filtered through a polytetrafluoroethylene (PTFE) membrane filter (pore diameter: 0.8 µm) to prepare an inkjet ink for textile printing 1.

### (Inkjet Textile Printing)

An ink cartridge was filled with the inkjet ink for textile printing 1 obtained as above, and an image was recorded on a cotton fabric (cotton broadcloth 40, manufactured by Shikisensha CO., LTD.) using an inkjet printer (PX-045A, manufactured by Seiko Epson Corporation) to obtain a colored fabric.

### (Heating Treatment)

The obtained colored fabric was dried for 12 hours at 20°C, and then heated for 60 seconds at 200°C using a heat press (desktop automatic flat press AF-54TEN, manufactured by Asahi Textile Machinery Co., Ltd.) to fix the ink.

### (Evaluation Method)

The dyeing characteristics of the image of the colored fabric obtained in Reference Example 1 were evaluated using a colorimeter (Gretag Macbeth Spectrolino, manufactured by X-Rite, Inc.). Good results were obtained in color developability.

### <Color Developability>

The color developability was evaluated according to the following criteria. Black and colors other than black were evaluated as follows.

### Colors Other Than Black (for example, cyan and magenta in Examples):

The evaluation was performed according to the following criteria with a saturation C value calculated from lightness (L*) and chromaticity (a*, b*) when an optical density (OD) value was 1.0.
A: L^{∗}>50 and C>40
B: L^{∗}>40 and 30<C≤40, or 40<L^{∗}≤50 and C>30
C: L^{∗}>30 and 20<C≤30, or 30<L^{∗}≤40 and C>20
D: L^{∗}≤30, or C≥20
Black:
   The evaluation was performed according to the following criteria with an optical density (OD) value.
SS: The OD value is 1.6 or greater.
S: The OD value is 1.4 or greater and less than 1.6.
A: The OD value is 1.2 or greater and less than 1.4.
B: The OD value is 1.0 or greater and less than 1.2.
C: The OD value is 0.8 or greater and less than 1.0.
D: The OD value is less than 0.8.

In Examples, Reference Examples and Comparative Examples, Reference Examples 3 and 8 to 10 and Comparative Examples 1, 2, and 3 used dyes or pigments other than black, and were evaluated for a color other than black.

In Examples, Reference Examples and Comparative Examples, Reference Examples 1, 2, 4 to 7, 12, and 14 and Comparative Example 4 and 5 used dyes or pigments other than black, and were evaluated for black.

A case where two color dyes were mixed as in Reference Examples 11, 13, and 15 was evaluated for a color other than black since the color is not black.

The colored fabric obtained in Reference Example 1 was evaluated for washing resistance, perspiration resistance, rub resistance, and dry cleaning resistance as follows.
- Washing Resistance: evaluated based on JIS L-0844 A-2 (revised in 2011). The evaluation result of washing resistance indicates that the larger the value, the better the fastness.
- Perspiration Resistance: evaluated based on JIS L-0848 (revised in 2004). The evaluation result of perspiration resistance indicates that the larger the value, the better the fastness.
- Rub Resistance: evaluated based on JIS L-0849 II (revised in 2013). The evaluation result of rub resistance indicates that the larger the value, the better the fastness.
- Dry Cleaning Resistance: evaluated based on JIS L-0860 A-1 (revised in 2008).
The evaluation result of dry cleaning resistance indicates that the larger the value, the better the fastness.

### [Reference Example 2]

Preparation of a colored resin particle dispersion and an inkjet ink for textile printing, inkjet textile printing, and a heating treatment were performed in the same manner as in Reference Example 1, except that C. I. Solvent Black 5 (trade name: NUBIAN BLACK NH-805) (dye B2, black) was used instead of C. I. Solvent Black 3 (trade name: Oil Black 860, manufactured by Orient Chemical Industries Co., Ltd.) (dye B1) used in Reference Example 1. The colored resin particle dispersion prepared in Reference Example 2 is also referred to as "colored resin particle dispersion (A2)", and the inkjet ink for textile printing prepared in Reference Example 2 is also referred to as "inkjet ink for textile printing 2".

### [Reference Example 3]

Preparation of a colored resin particle dispersion and an inkjet ink for textile printing, inkjet textile printing, and a heating treatment were performed in the same manner as in Reference Example 1, except that 50 parts by mass of C. I. Disperse Blue 359 (dye B3, other than black) was used instead of 100 parts by mass of C. I. Solvent Black 3 (trade name: Oil Black 860, manufactured by Orient Chemical Industries Co., Ltd.) (dye B1) used in Reference Example 1. The colored resin particle dispersion prepared in Reference Example 3 is also referred to as "colored resin particle dispersion (A3)", and the inkjet ink for textile printing prepared in Reference Example 3 is also referred to as "inkjet ink for textile printing 3".

### [Reference Example 4]

Preparation of a colored resin particle dispersion and an inkjet ink for textile printing, inkjet textile printing, and a heating treatment were performed in the same manner as in Reference Example 1, except that the amount of 2,2-dimethylolpropionic acid (DMPA) to be added was changed to 10 parts by mass, and the amount of triethylamine to be added was changed to 7.9 parts by mass in Reference Example 1. The colored resin particle dispersion prepared in Reference Example 4 is also referred to as "colored resin particle dispersion (A4)", and the inkjet ink for textile printing prepared in Reference Example 4 is also referred to as "inkjet ink for textile printing 4".

### [Reference Example 5]

Preparation of a colored resin particle dispersion and an inkjet ink for textile printing, inkjet textile printing, and a heating treatment were performed in the same manner as in Reference Example 1, except that the amount of 2,2-dimethylolpropionic acid (DMPA) to be added was changed to 4 parts by mass, and the amount of triethylamine to be added was changed to 3.2 parts by mass in Reference Example 1. The colored resin particle dispersion prepared in Reference Example 5 is also referred to as "colored resin particle dispersion (A5)", and the inkjet ink for textile printing prepared in Reference Example 5 is also referred to as "inkjet ink for textile printing 5".

### [Reference Example 6]

### (Production of Colored Resin Particle Dispersion (A6))

230 parts by mass of ETERNACOLL (registered trademark) UM90 (1/3) (manufactured by Ube Industries, Ltd.; number average molecular weight: 894; hydroxyl number: 125.5 mgKOH/g; a polycarbonate diol obtained by reacting a carbonate ester and a polyol mixture having a molar ratio of 1,4-cyclohexanedimethanol to 1,6-hexanediol of 1:3 by a polyol component), 28.7 parts by mass of 2,2-dimethylolpropionic acid, 202.2 parts by mass of hydrogenated MDI, 3.2 parts by mass of trimethylolpropane, and 150 parts by mass of methyl ethyl ketone were put into a sealed reaction vessel comprising a thermometer and a stirrer, and the inside of the reaction system was substituted by a nitrogen gas, followed by a reaction at 80°C for 6 hours under stirring to obtain a urethane prepolymer. The obtained methyl ethyl ketone solution was cooled to 40°C and cooled to 80°C, and 22.7 parts by mass (1.05 equivalents/carboxyl group) of triethylamine was added. Next, 80 parts by mass of C. I. Solvent Black 3 (trade name: Oil Black 860, manufactured by Orient Chemical Industries Co., Ltd.) (dye B1, black) was added under stirring. Next, a solution obtained by dissolving 3.0 parts by mass of hydrazine in 431 parts by mass of water was added to the methyl ethyl ketone solution. After emulsification and a chain elongation reaction, the acetone was distilled off at 30°C to 40°C under reduced pressure, and the concentration was adjusted by water to obtain a colored resin particle dispersion (A6) having a solid content of 40% and a viscosity of 350 cP/25°C.

Preparation of an inkjet ink for textile printing, inkjet textile printing, and a heating treatment were performed in the same manner as in Reference Example 1, except that the colored resin particle dispersion (A6) was used instead of the colored resin particle dispersion (A1) used in Reference Example 1. The inkjet ink for textile printing prepared in Reference Example 6 is also referred to as "inkjet ink for textile printing 6".

### [Reference Example 7]

Preparation of a colored resin particle dispersion and an inkjet ink for textile printing, inkjet textile printing, and a heating treatment were performed in the same manner as in Reference Example 6, except that the amount of 2,2-dimethylolpropionic acid (DMPA) to be added was changed to 70 parts by mass, and the amount of triethylamine to be added was changed to 55.4 parts by mass in Reference Example 6. The colored resin particle dispersion prepared in Reference Example 7 is also referred to as "colored resin particle dispersion (A7)", and the inkjet ink for textile printing prepared in Reference Example 7 is also referred to as "inkjet ink for textile printing 7".

### [Reference Example 8]

Preparation of a colored resin particle dispersion and an inkjet ink for textile printing, inkjet textile printing, and a heating treatment were performed in the same manner as in Reference Example 6, except that C. I. Solvent Blue 44 (trade name: Savinyl Blue GLS, manufactured by Clariant Japan, K.K.) (dye B4, other than black) was used instead of C. I. Solvent Black 3 (trade name: Oil Black 860, manufactured by Orient Chemical Industries Co., Ltd.) (dye B1) used in Reference Example 6. The colored resin particle dispersion prepared in Reference Example 8 is also referred to as "colored resin particle dispersion (A8)", and the inkjet ink for textile printing prepared in Reference Example 8 is also referred to as "inkjet ink for textile printing 8".

### [Reference Example 9]

Preparation of a colored resin particle dispersion and an inkjet ink for textile printing, inkjet textile printing, and a heating treatment were performed in the same manner as in Reference Example 8, except that the amount of ETERNACOLL UM90 (1/3) to be added was changed to 170 parts by mass, the amount of 2,2-dimethylolpropionic acid (DMPA) to be added was changed to 100 parts by mass, and the amount of triethylamine to be added was changed to 79.1 parts by mass. The colored resin particle dispersion prepared in Reference Example 9 is also referred to as "colored resin particle dispersion (A9)", and the inkjet ink for textile printing prepared in Reference Example 9 is also referred to as "inkjet ink for textile printing 9".

### [Reference Example 10]

### (Preparation of Aqueous Pretreatment Liquid Containing Aggregating Agent)

Cation Master PD-7 (aggregating agent; manufactured by Yokkaichi Chemical Company, Limited., solid content: 50 mass%) (50 parts by mass), BYK348 (manufactured by BYK JAPAN KK) (5 parts by mass), glycerin (100 parts by mass), and water (845 parts by mass) were mixed and stirred to prepare an aqueous pretreatment liquid.

### (Pretreatment Step)

The aqueous pretreatment liquid prepared as above was squeezed out onto a cotton fabric (cotton broadcloth 40, manufactured by Shikisensha CO., LTD.) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

Inkjet textile printing, a heating treatment, and evaluation were performed in the same manner as in Reference Example 8, except that the cotton fabric after the pretreatment step was used instead of the cotton fabric in the inkjet textile printing of Reference Example 8.

### [Reference Example 11]

Preparation of a colored resin particle dispersion and an inkjet ink for textile printing, inkjet textile printing, a heating treatment, and evaluation were performed in the same manner as in Reference Example 6, except that 42 parts by mass of C. I. Disperse Red 60 (trade name: KP PLAST Red B, manufactured by KIWA Chemical Industry Co., Ltd.) (dye B5, other than black) and 5 parts by mass of C. I. Vat Red 41 (trade name: KP PLAST Brilliant Red MG, manufactured by KIWA Chemical Industry Co., Ltd.) (dye B6, other than black) were used instead of 80 parts by mass of C. I. Solvent Black 3 (trade name: Oil Black 860, manufactured by Orient Chemical Industries Co., Ltd.) (dye B1, black) used in Reference Example 6.

The colored resin particle dispersion prepared in Reference Example 11 is also referred to as "colored resin particle dispersion (A10)", and the inkjet ink for textile printing prepared in Reference Example 11 is also referred to as "inkjet ink for textile printing 10".

### [Reference Example 12]

Preparation of a colored resin particle dispersion and an inkjet ink for textile printing, inkjet textile printing, a heating treatment, and evaluation were performed in the same manner as in Reference Example 6, except that the amount of C. I. Solvent Black 3 (trade name: Oil Black 860, manufactured by Orient Chemical Industries Co., Ltd.) (dye B1, black) to be added was changed to 1,200 parts by mass in Reference Example 6.

The colored resin particle dispersion prepared in Reference Example 12 is also referred to as "colored resin particle dispersion (A11)", and the inkjet ink for textile printing prepared in Reference Example 12 is also referred to as "inkjet ink for textile printing 11".

### [Reference Example 13]

### (Pretreatment Step)

The aqueous pretreatment liquid prepared in Reference Example 10 was squeezed out onto a cotton-polyester blend fabric (cotton 65 mass% polyester 35 mass%, T/C broad 65/35, manufactured by Shikisensha CO., LTD.) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

Inkjet textile printing, a heating treatment, and evaluation were performed in the same manner as in Reference Example 11, except that the cotton-polyester blend fabric after the pretreatment step was used instead of the cotton fabric in the inkjet textile printing of Reference Example 11.

### [Reference Example 14]

Preparation of a colored resin particle dispersion and an inkjet ink for textile printing, inkjet textile printing, and a heating treatment were performed in the same manner as in Reference Example 1, except that the amount of C. I. Solvent Black 3 (trade name: Oil Black 860, manufactured by Orient Chemical Industries Co., Ltd.) (dye B1), used in Reference Example 1, to be added was changed to 1,800 parts by mass. The colored resin particle dispersion prepared in Reference Example 14 is also referred to as "colored resin particle dispersion (A12)", and the inkjet ink for textile printing prepared in Reference Example 14 is also referred to as "inkjet ink for textile printing 12".

### [Reference Example 15]

Preparation of a colored resin particle dispersion and an inkjet ink for textile printing, inkjet textile printing, a heating treatment, and evaluation were performed in the same manner as in Reference Example 11, except that the amount of C. I. Disperse Red 60 (trade name: KP PLAST Red B, manufactured by KIWA Chemical Industry Co., Ltd.) (dye B5, other than black), used in Reference Example 11, to be added was changed to 36 parts by mass, and the amount of C. I. Vat Red 41 (trade name: KP PLAST Brilliant Red MG, manufactured by KIWA Chemical Industry Co., Ltd.) (dye B6, other than black) to be added was changed to 4 parts by mass.

The colored resin particle dispersion prepared in Reference Example 15 is also referred to as "colored resin particle dispersion (A13)", and the inkjet ink for textile printing prepared in Reference Example 15 is also referred to as "inkjet ink for textile printing 13".

### [Comparative Example 1]

### (Preparation of Inkjet Ink for Textile Printing C1)

C. I. Disperse Blue 359 (DB359) (dye B3, other than black) (15 parts by mass), Borchi (registered trademark) Gen 1350 (modified polyurethane, active ingredients 40%, manufactured by MATSUO SANGYO CO., LTD., other than black) (10 parts by mass), water (75 parts by mass), and zirconia beads having a diameter of 0.1 mm were mixed, and dispersed using a planetary micro mill (Pulverisette 7, manufactured by Fritsch GmbH) at a rotation speed of 400 revolutions per minute (rpm) for 10 hours to obtain a dispersion liquid. From the obtained dispersion liquid, the zirconia beads were removed using a filter cloth to obtain a disperse dye dispersion.

The disperse dye dispersion (30 parts by mass) obtained as above, glycerin (10 parts by mass), propylene glycol (20 parts by mass), BYK-348 (manufactured by BYK JAPAN KK) (0.4 parts by mass), and water (39.6 parts by mass) were mixed and filtered through a membrane filter (pore diameter: 0.8 µm) to prepare an inkjet ink for textile printing C2.

### (Inkjet Textile Printing, Heating Treatment, and Evaluation)

Inkjet textile printing, a heating treatment, and evaluation were performed in the same manner as in Reference Example 1.

### [Comparative Example 2]

Preparation of an inkjet ink for textile printing C2, inkjet textile printing, a heating treatment, and evaluation were performed in the same manner as in Comparative Example 1, except that C. I. Disperse Red 60 (trade name: KP PLAST Red B, manufactured by KIWA Chemical Industry Co., Ltd.) (dye B5, other than black) (DR60) was used instead of C. I. Disperse Blue 359 (DB359) in Comparative Example 1.

### [Comparative Example 3]

### (Preparation of Pigment Dispersion P1)

A styrene-acrylic acid copolymer Joncryl 678 (manufactured by BASF SE) (3 parts by mass), dimethylaminoethanol (1.3 parts by mass), and water (80.7 parts by mass) were stirred and mixed at 70°C. Next, C. I. Pigment Blue 15:3 (15 parts by mass) and 50 vol% zirconia beads having a particle diameter of 0.5 mm were filled and dispersed using a sand grinder mill to obtain a pigment dispersion (P1) in which the content of C. I. Pigment Blue 15:3 as a pigment was 15 mass%.

### (Preparation of Inkjet Ink for Textile Printing C3)

The pigment dispersion P1 (20 parts by mass) obtained as above, a urethane resin WBR-2101 (manufactured by TAISEI FINE CHEMICAL CO., LTD., solid content 25%) (24 parts by mass), glycerin (12 parts by mass), triethylene glycol monobutyl ether (2 parts by mass), 2-pyrrolidone (3 parts by mass), SURFYNOL 465 (1 part by mass), 1,2-hexanediol (2 parts by mass), and water (36 parts by mass) were mixed and filtered through a membrane filter (pore diameter: 0.8 µm) to prepare an inkjet ink for textile printing C3.

### (Inkjet Textile Printing, Heating Treatment, and Evaluation)

Inkjet textile printing, a heating treatment, and evaluation were performed in the same manner as in Reference Example 1.

### [Comparative Example 4]

Preparation of an inkjet ink for textile printing C4, inkjet textile printing, a heating treatment, and evaluation were performed in the same manner as in Comparative Example 3, except that BONJET BLACK CW-1 (manufactured by Orient Chemical Industries Co., Ltd., pigment solid content: 20 mass%) (P2) was used instead of the pigment dispersion P1, and a cotton-polyester blend fabric was used instead of the cotton fabric in Comparative Example 3. BONJET BLACK CW-1 contains carbon black (CB) as a pigment.

### [Comparative Example 5]

Preparation of a colored resin particle dispersion and an inkjet ink for textile printing, inkjet textile printing, and a heating treatment were performed in the same manner as in Reference Example 1, except that the amount of 2,2-dimethylolpropionic acid (DMPA) to be added was changed to 100 parts by mass, and the amount of triethylamine to be added was changed to 79.1 parts by mass in Reference Example 1. The colored resin particle dispersion prepared in Comparative Example 5 is also referred to as "colored resin particle dispersion (C5)", and the inkjet ink for textile printing prepared in Comparative Example 5 is also referred to as "inkjet ink for textile printing C5".

### [Comparative Example 6]

Preparation of a colored resin particle dispersion and an inkjet ink for textile printing, inkjet textile printing, and a heating treatment were performed in the same manner as in Reference Example 6, except that the amount of 2,2-dimethylolpropionic acid (DMPA) to be added was changed to 2 parts by mass, and the amount of triethylamine to be added was changed to 1.6 parts by mass in Reference Example 6. The colored resin particle dispersion prepared in Comparative Example 6 is also referred to as "colored resin particle dispersion (C6)", and the inkjet ink for textile printing prepared in Comparative Example 6 is also referred to as "inkjet ink for textile printing C6".

The evaluation results of Reference Examples 1 to 15 and Comparative Examples 1 to 6 are shown as follows.

Table 1 also shows the acid value (mgKOH/g) of the urethane resin in the colored resin particles, the average particle diameter of the colored resin particles, and the mass ratio of the urethane resin content to the dye content (urethane resin content/dye content) in each of the colored resin particle dispersions.

Here, the acid value of the urethane resin is a value measured as follows: urethane resin particles produced without adding a dye in the production of the colored resin particles are applied to a glass plate and dried for 24 hours at a temperature of 60°C under reduced pressure of 20 mmHg, and the obtained coating film is dissolved in N-methylpyrrolidone to measure the acid value according to the indicator titration method of JIS K 1557. The average particle diameter (MV) of the colored resin particles is a value measured using a particle size distribution measurement apparatus (NANOTRAC UPA EX150, manufactured by Nikkiso Co., Ltd., trade name) in the colored resin particle dispersion.

**[Table 1]**

| | | Referenc e Example 1 | Referenc e Example 2 | Referenc e Example 3 | Referenc e Example 4 | Referenc e Example 5 | Referenc e Example 6 | Referenc e Example 7 | Referenc e Example 8 | Referenc e Example 9 | Reference Example 10 | Reference Example 11 | Reference Example 12 | Reference Example 13 | Reference Example 14 | Reference Example 15 |
|---|---|---|---|---|---|---|---|---|---|---|---|---|---|---|---|---|
| Dye | | B1 | B2 | B3 | B1 | B1 | B1 | B1 | B4 | B4 | B4 | B5,B6 | B1 | B5,B6 | B1 | B5,B6 |
| Colored Resin Particle Dispersion | | A1 | A2 | A3 | A4 | A5 | A6 | A7 | A8 | A9 | A8 | A10 | A11 | A10 | A12 | A13 |
| Acid Value of Urethane Resin (mgKOH/g) | | 37 | 37 | 37 | 14 | 6 | 26 | 58 | 26 | 87 | 26 | 26 | 58 | 26 | 37 | 26 |
| Urethane Resin/Dye (mass ratio) | | 3.3 | 3.3 | 6.6 | 3.1 | 3.0 | 5.8 | 6.4 | 5.8 | 6.0 | 5.8 | 9.9 | 0.4 | 9.9 | 0.18 | 11.7 |
| Average Particle Diameter (nm) | | 89 | 91 | 85 | 127 | 168 | 101 | 65 | 92 | 57 | 134 | 183 | 46 | 183 | 43 | 205 |
| Inkjet Ink for Textile Printing | | 1 | 2 | 3 | 4 | 5 | 6 | 7 | 8 | 9 | 8 | 10 | 11 | 10 | 12 | 13 |
| Fabric | | Cotton | Cotton | Cotton | Cotton | Cotton | Cotton | Cotton | Cotton | Cotton | Cotton | Cotton | Cotton | Cotton/ Polyester | Cotton | Cotton |
| Pretreatment with Aggregating Agent | | Absent | Absent | Absent | Absent | Absent | Absent | Absent | Absent | Absent | Present | Absent | Absent | Present | Absent | Absent |
| Color Developability | | A | A | A | A | B | B | B | B | B | A | B | A | B | A | C |
| Washing Resistance Test | | 4-5 | 4-5 | 4-5 | 5 | 5 | 4-5 | 4 | 4-5 | 3 | 4 | 4 | 34 | 4 | 3-4 | 4-5 |
| Perspiration Resistance Test | Acid | 4-5 | 4 | 4-5 | 4-5 | 4-5 | 4-5 | 4-5 | 4-5 | 4 | 4-5 | 4-5 | 4-5 | 4-5 | 4-5 | 5 |
| | Alkali | 4-5 | 4 | 4-5 | 4-5 | 4-5 | 4-5 | 4-5 | 4-5 | 4 | 4-5 | 4-5 | 4-5 | 4-5 | 3-4 | 5 |
| Rub Resistance Test | Dry | 4-5 | 4 | 4-5 | 4-5 | 4-5 | 4-5 | 4 | 4-5 | 3-4 | 4 | 4-5 | 4-5 | 4-5 | 3 | 4-5 |
| | Moist | 3-4 | 3 | 3-4 | 34 | 4 | 3-4 | 3 | 3-4 | 2-3 | 3 | 4 | 4 | 4 | 2-3 | 4 |
| Dry Cleaning Resistance Test | | 4-5 | 4 | 4-5 | 4-5 | 4-5 | 4-5 | 4-5 | 4-5 | 4 | 4-5 | 4-5 | 4 | 4-5 | 4 | 4-5 |

**[Table 2]**

| Continued from Table 1 | | | | | | | |
|---|---|---|---|---|---|---|---|
| | | Comparative Example 1 | Comparative Example 2 | Comparative Example 3 | Comparative Example 4 | Comparative Example 5 | Comparative Example 6 |
| Dye | | B3 | B5 | - | - | B1 | B1 |
| Colored Resin Particle Dispersion | | - | - | - | - | C5 | C6 |
| Acid Value of Urethane Resin (mgKOH/g) | | | | 48 | 48 | 105 | 2 |
| Urethane Resin/Dye (mass ratio) | | | | | | 4.0 | 4.4 |
| Inkjet Ink for Textile Printing | | C1 | C2 | C3 | C4 | C5 | C6 |
| Average Particle Diameter (nm) | | 94 | 121 | 104 | 142 | 64 | 185 |
| Fabric | | Cotton | Cotton | Cotton | Cotton/ Polyester | Cotton | Cotton |
| Pretreatment with Aggregating Agent | | Absent | Absent | Absent | Absent | Absent | Evaluation cannot be performed. |
| Color Developability | | D | D | B | B | A | |
| Washing Resistance Test | | 1 | 1 | 4 | 4 | 2 | |
| Perspiration Resistance Test | Aci d | 3 | 4 | 4 | 4 | 4 | |
| | Alk ali | 1-2 | 2 | 4 | 4 | 3 | |
| Rub Resistance Test | Dry | 2 | 2 | 2 | 2 | 3 | |
| | Mo ist | 1-2 | 1-2 | 2 | 2 | 2 | |
| Dry Cleaning Resistance Test | | 1 | 1 | 4 | 4 | 3 | |

[Examples 23, 24, and 29 to 33 and Reference Examples 16 to 22, and 25 to 28]

### (Production of Colored Resin Particle Dispersion (A14))

13.2 parts by mass of poly(caprolactone) diol (number average molecular weight: 520), 2.7 parts by mass of 2,2-dimethylolbutanoic acid (DMBA), 7.6 parts by mass of hexamethylene diisocyanate (HDI), and 17.3 parts by mass of ethyl acetate were put into a sealed reaction vessel comprising a thermometer and a stirrer, and 0.08 parts by mass of Neostan U-600 (manufactured by Nitto Chemical Industry Co., Ltd., trade name) was added as a catalyst. The inside of the reaction system was substituted by a nitrogen gas, followed by a reaction at 70°C for 12 hours under stirring. Thereafter, 2 parts by mass of isopropanol was added, and the resulting mixture was reacted for 2 hours at 70°C to synthesize a urethane polymer (Y1) having no residual isocyanate group. The absence of the residual isocyanate group was confirmed by a potentiometric titration method. Ethyl acetate was added thereto to prepare and use a urethane polymer having a solid content concentration of 30 mass%. The obtained urethane polymer (Y1) had an acid value of 39 mgKOH/g and a weight-average molecular weight of 6,400 in terms of polystyrene.

17.6 parts by mass of a solution obtained by dissolving C. I. Solvent Black 3 (trade name: Oil Black 860, manufactured by Orient Chemical Industries Co., Ltd.) (dye B1, black) in ethyl acetate at a concentration of 30 mass%, 3.2 parts by mass of a 30% ethyl acetate solution of the obtained urethane polymer (Y1), 0.06 part by mass of triethylamine (0.9 equivalents/carboxyl group), and 10.4 parts by mass of ethyl acetate were mixed. The resulting mixture was mixed with 47.4 parts by mass of a 1% sodium dodecyl sulfate aqueous solution and emulsified using a homogenizer (ED-1 manufactured by Nippon Seiki Co., Ltd.) for 12 minutes at 16,000 revolutions. The obtained emulsion was filtered using a 1 micron filter, and then heated to 45°C under blast stirring to distill off a part of the organic solvent and the water, and a colored resin particle dispersion (A14) having a solid content concentration of 20 mass% was obtained. The ratio of the urethane resin to the dye (mass ratio) in the colored resin particle dispersion (A14) was 0.18, and the average particle diameter (MV) was 98 nm. The acid value of the urethane resin was 39 mgKOH/g.

### (Production of Colored Resin Particle Dispersion (A15))

24.3 parts by mass of poly(caprolactone) diol (number average molecular weight: 520), 15.2 parts by mass of 2,2-dimethylolbutanoic acid (DMBA), 37.8 parts by mass of hexamethylene diisocyanate (HDI), 2.1 parts by mass of trimethylolpropane, and 214 parts by mass of tetrahydrofuran were put into a sealed reaction vessel comprising a thermometer and a stirrer, and 0.28 parts by mass of Neostan U-600 (manufactured by Nitto Chemical Industry Co., Ltd., trade name) was added as a catalyst. The inside of the reaction system was substituted by a nitrogen gas, followed by a reaction at 65°C for 4 hours under stirring to obtain a 30 mass% tetrahydrofuran solution of a urethane prepolymer (Y2) having an isocyanate group at a terminal thereof. The presence of the residual isocyanate group at a terminal was confirmed by a potentiometric titration method.

The obtained urethane prepolymer (Y2) had an acid value of 64 mgKOH/g and a weight-average molecular weight of 2,000 in terms of polystyrene.

3.53 parts by mass of C. I. Solvent Black 3 (trade name: Oil Black 860, manufactured by Orient Chemical Industries Co., Ltd.) (dye B1, black) was dissolved in 12.3 parts by mass of tetrahydrofuran, and 1.3 g of hexamethylene diisocyanate (HDI) was added thereto. To the resulting mixture, 3.24 parts by mass of the 30 mass% tetrahydrofuran solution of the urethane prepolymer (Y2), 0.1 parts by mass of triethylamine (0.9 equivalents/carboxyl group), and 10.4 parts by mass of ethyl acetate were added. Next, 47.4 parts by mass of a 1% sodium dodecyl sulfate aqueous solution was mixed therewith and emulsified using a homogenizer (ED-1 manufactured by Nippon Seiki Co., Ltd.) for 12 minutes at 16,000 revolutions. The obtained emulsion was filtered using a 1 micron filter, and then heated to 45°C under blast stirring to distill off a part of the organic solvent and the water.

1.9 g of a 10 mass% aqueous solution of UCAT SA102 (manufactured by San-Apro Ltd, trade name) was added to the obtained emulsified liquid. The liquid was reacted for 48 hours at 50°C to hydrolyze the isocyanate group and generate a urea crosslink. A colored resin particle dispersion (A15) having a solid content concentration of 20 mass% was obtained. The ratio of the urethane resin to the dye (mass ratio) in the colored resin particle dispersion (A15) was 0.75, and the average particle diameter (MV) was 120 nm. The acid value of the urethane resin was 11.0 mgKOH/g.

Here, the acid value of the urethane resin is a value measured as follows: urethane resin particles produced without adding a dye in the production of the colored resin particles are applied to a glass plate and dried for 24 hours at a temperature of 60°C under reduced pressure of 20 mmHg, and the obtained coating film is dissolved in N-methylpyrrolidone to measure the acid value according to the indicator titration method of JIS K 1557.

### (Production of Colored Resin Particle Dispersion (A16))

5.3 parts by mass of C. I. Solvent Black 3 (trade name: Oil Black 860, manufactured by Orient Chemical Industries Co., Ltd.) (dye B1, black) was dissolved in 12.3 parts by mass of tetrahydrofuran. To the resulting mixture, 3.24 parts by mass of the 30 mass% tetrahydrofuran solution of the urethane prepolymer (Y2), 0.1 parts by mass of triethylamine (0.9 equivalents/carboxyl group), and 10.4 parts by mass of ethyl acetate were added. Next, 47.4 parts by mass of a 1% sodium dodecyl sulfate aqueous solution was mixed therewith and emulsified using a homogenizer (ED-1 manufactured by Nippon Seiki Co., Ltd.) for 12 minutes at 16,000 revolutions. The obtained emulsion was filtered using a 1 micron filter, and then heated to 45°C under blast stirring to distill off a part of the organic solvent and the water.

1.9 g of a 10 mass% aqueous solution of UCAT SA102 (manufactured by San-Apro Ltd, trade name) was added to the obtained emulsified liquid. The liquid was reacted for 48 hours at 50°C to hydrolyze the isocyanate group and generate a urea crosslink. A colored resin particle dispersion (A16) having a solid content concentration of 20 mass% was obtained. The ratio of the urethane resin to the dye (mass ratio) in the colored resin particle dispersion (A16) was 0.18, and the average particle diameter (MV) was 115 nm. The acid value of the urethane resin was 62 mgKOH/g.

Here, the acid value of the urethane resin is a value measured as follows: urethane resin particles produced without adding a dye in the production of the colored resin particles are applied to a glass plate and dried for 24 hours at a temperature of 60°C under reduced pressure of 20 mmHg, and the obtained coating film is dissolved in N-methylpyrrolidone to measure the acid value according to the indicator titration method of JIS K 1557.

Using the obtained colored resin particle dispersions (A14) to (A16), components shown in Table 2 were mixed to prepare ink compositions. The ink compositions are used as inkjet ink for textile printings 15 to 30.

The numerical value of each component contained in each of the ink compositions of Table 2 represents "parts by mass".

### (Examples 23, 24, 30 and 31, and Reference Examples 16 to 22, 25 to 28)

Inkjet textile printing, a heating treatment, and evaluation were performed in the same manner as in Reference Example 10, except that the inkjet ink for textile printings 15 to 27, 29, and 30 were used instead of the inkjet ink for textile printing 8 in the inkjet textile printing of Reference Example 10.

### (Example 29)

### (Pretreatment Step)

The aqueous pretreatment liquid prepared in Reference Example 10 was squeezed out onto a cotton-polyester blend fabric (65 mass% cotton-35 mass% polyester, T/C broad 65/35, manufactured by Shikisensha CO., LTD.) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

Inkjet textile printing, a heating treatment, and evaluation were performed in the same manner as in Reference Example 10, except that the inkjet ink for textile printing 28 was used in place of the inkjet ink for textile printing 8, and the cotton-polyester blend fabric after the pretreatment step was used instead of the cotton fabric after the pretreatment step in the inkjet textile printing of Reference Example 10.

### (Example 32)

### (Pretreatment Step)

The aqueous pretreatment liquid prepared in Reference Example 10 was squeezed out onto a polyester (polyester 100 mass%, manufactured by Shikisensha CO., LTD.) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

Inkjet textile printing, a heating treatment, and evaluation were performed in the same manner as in Example 30, except that the polyester after the pretreatment step was used instead of the cotton fabric after the pretreatment step in the inkjet textile printing of Example 30.

### (Example 33)

### (Pretreatment Step)

The aqueous pretreatment liquid prepared in Reference Example 10 was squeezed out onto a cotton-polyester blend fabric (65 mass% cotton-35 mass% polyester, T/C broad 65/35, manufactured by Shikisensha CO., LTD.) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

Inkjet textile printing, a heating treatment, and evaluation were performed in the same manner as in Example 24, except that the cotton-polyester blend fabric after the pretreatment step was used instead of the cotton fabric after the pretreatment step in the inkjet textile printing of Example 24.

Regarding color developability, a black dye or pigment was used in Examples 23, 24 and 30 to 33, and Reference Examples 16 to 22 and 25 to 28, and evaluated as black (black).

The evaluation results are shown in Table 2.

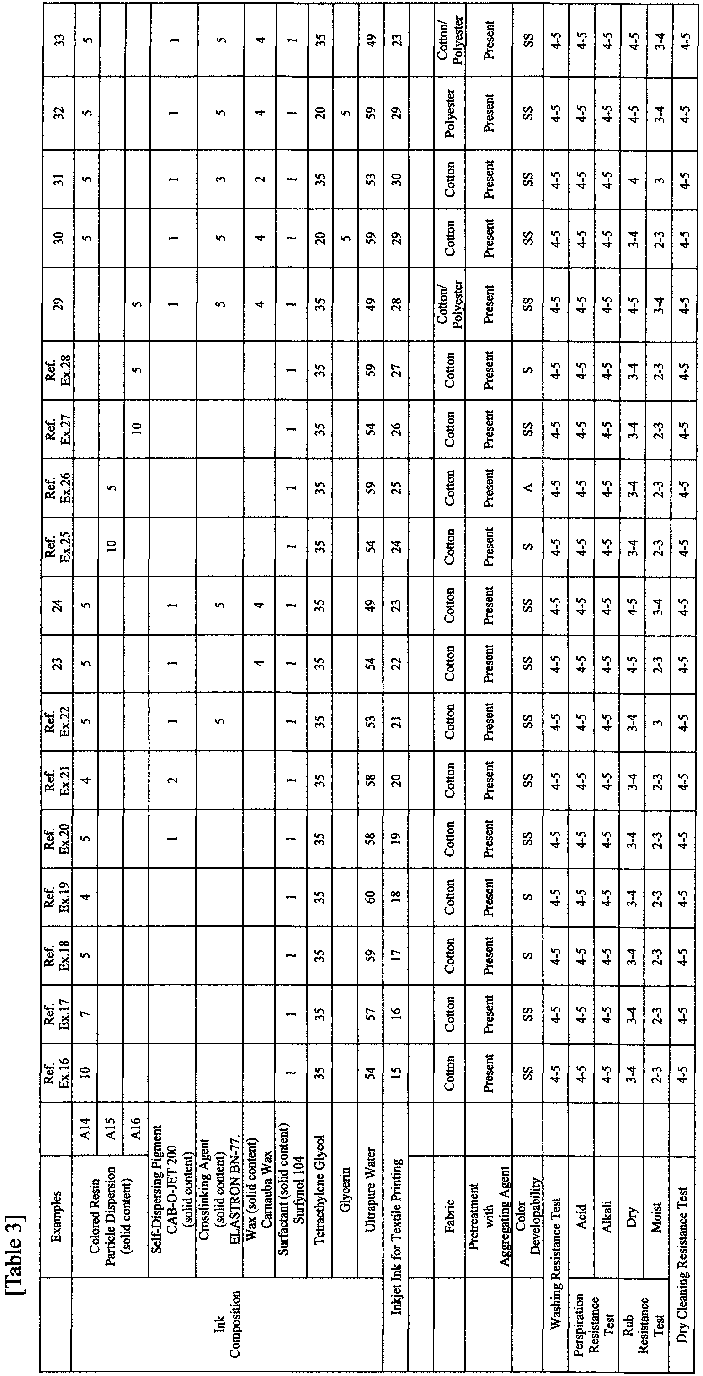

Self-Dispersing Carbon Black Pigment CAB-O-JET 200 (manufactured by Cabot Corporation)
ELASTRON BN-77 (blocked isocyanate, volume average particle diameter: 19 nm, dissociation temperature: 120°C or higher, manufactured by DKS Co. Ltd.)
Carnauba Wax (cellosol 524 (manufactured by Chukyo Yushi Co., Ltd., carnauba, nonionic, melting point: 83°C, volume average particle diameter 0.07 µm)
Surfynol 104 (manufactured by Nissin Chemical Co., Ltd.)

The untreated fabric before dyeing and the colored fabric after dyeing were touched by hand to perform sensory evaluation of the texture of the colored fabric. The colored fabrics prepared using the ink compositions of Examples 23, 24, and 29 to 33, and Reference Examples 16 to 22, and 25 to 28 exhibited an excellent texture close to that of the untreated fabric.

Examples IS-4 to IS-6, Reference Examples IS-1 to IS-3 and Comparative Example IS-C1

### (Example/Reference Example IS Preparation of Inkjet Ink for Textile Printing 31)

Preparation of a colored resin particle dispersion and an inkjet ink for textile printing was performed in the same manner as in Reference Example 6, except that C. I. Disperse Yellow 201 (dye B7, other than black) was used instead of C. I. Solvent Black 3 (trade name: Oil Black 860, manufactured by Orient Chemical Industries Co., Ltd.) (dye B1) used in Reference Example 6. The colored resin particle dispersion prepared in Examples/Reference Example IS is also referred to as "colored resin particle dispersion (A17)", and the inkjet ink for textile printing prepared in Example/Reference Example IS is also referred to as "inkjet ink for textile printing 31".

### [Preparation of Inkjet Ink (Qm)]

### (Preparation of Pigment Dispersion Liquid)

3 g of a styrene-acrylic acid copolymer (JONCRYL 678, manufactured by BASF SE, trade name), 1.3 g of dimethylaminoethanol, and 80.7 g of ion exchange water were stirred and mixed at 70°C. Next, 15 g of C.I. Pigment Red 112 and 50 vol% zirconia beads having a particle diameter of 0.5 mm were filled and dispersed using a sand grinder mill to obtain a pigment dispersion liquid in which the content of the pigment was 15 mass%.

### (Preparation of Aqueous Binder)

50 g of 2-butanone was put into a three-necked flask, and the internal temperature was increased to 75°C. A mixture of 80 g of n-butyl methacrylate, 20 g of acrylic acid, 50 g of 2-butanone, and 0.5 g of azoisobutyronitrile was added dropwise thereto for 3 hours. After the dropwise addition, the mixture was heated under reflux for 5 hours, cooled to room temperature, and heated under reduced pressure to obtain a residue of a polymer. 350 mL of ion exchange water and a 1.05-fold molar amount of sodium hydroxide of acrylic acid added as a monomer were added thereto, and then dissolved. The mixture was diluted with ion exchange water so that the total amount became 500 g to obtain a 20 mass% aqueous solution of an aqueous binder.

### (Preparation of Pigment Ink)

46.6 g of the above pigment dispersion liquid, 15 g of the above 20 mass% aqueous solution of the aqueous binder, 2.9 g of PDX-7664A (manufactured by BASF SE, trade name), 10 g of triethylene glycol monobutyl ether, 5 g of 1,2-hexanediol, 11.2 g of diethylene glycol, and 0.6 g of OLEFIN 465 (manufactured by Nissin Chemical Co., Ltd., trade name) were mixed, and ion exchange water was added thereto to prepare a total amount of 100 g. The mixture was filtered through a 0.8 µm filter to obtain an inkjet ink (Qm). The inkjet ink (Qm) is a magenta ink.

### [Preparation of Inkjet Ink (Qc)]

An inkjet ink (Qc) was prepared in the same manner as in the preparation of the inkjet ink (Qm), except that C. I. Pigment Blue 15: 4 was used instead of C. I. Pigment Red 112. The inkjet ink (Qc) is a cyan ink.

### [Preparation of Inkjet Ink (Qy)]

An inkjet ink (Qy) was prepared in the same manner as in the preparation of the inkjet ink (Qm), except that C. I. Pigment yellow 180 was used instead of C. I. Pigment Red 112. The inkjet ink (Qy) is a yellow ink.

### [Preparation of Inkjet Ink (Qb)]

An inkjet ink (Qb) was prepared in the same manner as in the preparation of the inkjet ink (Qm), except that carbon black was used instead of C. I. Pigment Red 112. The inkjet ink (Qb) is a black ink.

### [Preparation of Ink Set for Inkjet Textile Printing]

Ink sets for inkjet textile printing S1 to S6 and X1 were prepared with the combinations of the inkjet inks shown in the following Table 3.

### (Ink Set Evaluation Method)

### (Preparation of Aqueous Pretreatment Liquid Containing Aggregating Agent)

Cation Master PD-7 (aggregating agent; manufactured by Yokkaichi Chemical Company, Limited., solid content: 50 mass%) (50 parts by mass), BYK348 (manufactured by BYK JAPAN KK) (5 parts by mass), glycerin (100 parts by mass), and water (845 parts by mass) were mixed and stirred to prepare an aqueous pretreatment liquid.

### (Pretreatment Step)

The aqueous pretreatment liquid prepared as above was squeezed out onto each of a polyester fabric (POLYESTER TROPICAL (manufactured by TEIJIN LIMITED), manufactured by Shikisensha CO., LTD., product code A02-01019), a cotton fabric (cotton broadcloth with mercerization treatment, manufactured by Shikisensha CO., LTD., product code A02-01002), and a 65% polyester-35% cotton blend fabric (blended polyester 65/cotton 35 broad, manufactured by Shikisensha CO., LTD., product code A02-01030) by a padding method with a squeezing ratio of 70%, and dried for 24 hours. The squeezing ratio (%) represents the residual amount (mass ratio) of the aqueous treatment liquid with respect to the fabric after squeezing the fabric including the aqueous treatment liquid.

### (Inkjet Textile Printing, Heating Treatment, and Evaluation)

The ink sets for inkjet textile printing S1 to S6 and X1 were loaded in an ink cartridge. Images were printed on a polyester fabric (POLYESTER TROPICAL (manufactured by TEIJIN LIMITED), manufactured by Shikisensha CO., LTD., product code A02-01019) after the pretreatment step, a cotton fabric (cotton broadcloth with mercerization treatment, manufactured by Shikisensha CO., LTD., product code A02-01002) after the pretreatment step, and a 65% polyester-35% cotton blend fabric (blended polyester 65/cotton 35 broad, manufactured by Shikisensha CO., LTD., product code A02-01030) after the pretreatment step, respectively, using an inkjet printer (COLORIO PX-045A manufactured by Seiko Epson Corporation, trade name), and dried at room temperature for 12 hours. After the drying, a heat treatment was performed at a temperature of 200°C under a pressure of 0.20 N/cm² for 60 seconds using a heat press (manufactured by Asahi Textile Machinery Co., Ltd., trade name: desktop automatic flat press AF-54TEN) to obtain colored fabrics.

### Image clarity evaluation was performed as follows on the obtained colored fabrics.

### [Image Clarity]

Sensory evaluation by visual observation was carried out. Evaluation was carried out in four stages: A for the case where all three types of fabrics exhibit a clear image, B for the case where two types of fabrics exhibit a clear image, C for the case where only one type of fabric exhibits a clear image, and D for the case where there is no clear image. The results are shown in Table 3.

**[Table 4]**

| Examples | Reference IS-1 | Reference IS-2 | Reference IS-3 | IS-4 | IS-5 | IS-6 | Comparative Example IS-C1 |
|---|---|---|---|---|---|---|---|
| Ink Set for Inkjet Textile Printing | S1 | S2 | S3 | S4 | S5 | S6 | X1 |
| Magenta Ink | (Qm) | (Qm) | Inkjet Ink for Textile Printing 10 | (Qm) | Inkjet Ink for Textile Printing 10 | Inkjet Ink for Textile Printing 10 | (Qm) |
| Yellow Ink | (Qy) | (Qy) | (Qy) | Inkjet Ink for Textile Printing 31 | Inkjet Ink for Textile Printing 31 | Inkjet Ink for Textile Printing 31 | (Qy) |
| Cyan Ink | (Qc) | Inkjet Ink for Textile Printing 3 | (Qc) | (Qc) | Inkjet Ink for Textile Printing 3 | Inkjet Ink for Textile Printing 3 | (Qc) |
| Black Ink | Inkjet Ink for Textile Printing 15 | Inkjet Ink for Textile Printing 15 | Inkjet Ink for Textile Printing 15 | Inkjet Ink for Textile Printing 15 | Inkjet Ink for Textile Printing 15 | (Qb) | (Qb) |
| Pretreatment with Aggregating Agent | Present | Present | Present | Present | Present | Present | Present |
| Image Clarity | B | A | A | A | A | B | D |

In a case where an ink set containing the inkjet ink for textile printing according to the embodiment of the present invention was used, excellent image clarity was obtained, and the effect was particularly remarkable in a case where the inkjet ink for textile printing according to the embodiment of the present invention was used as a black ink.

According to the present invention, it is possible to provide an inkjet ink for textile printing capable of coloring various types of fabrics and exhibiting excellent color developability and dyeing fastness (washing resistance, rub resistance, perspiration resistance, and dry cleaning resistance) in an image to be obtained, an ink cartridge filled with the inkjet ink for textile printing, and an inkjet textile printing method using the inkjet ink for textile printing.

## Claims

1. An inkjet ink for textile printing comprising:
water;
an aqueous organic solvent;
colored resin particles, and
a wax,
wherein the colored resin particles contain a urethane resin and at least one type of dye selected from the group consisting of an oil-soluble dye, a disperse dye, and a vat dye, and
the urethane resin has an acid value of 5 to 90 mgKOH/g,
wherein the aqueous organic solvent has an aqueous solubility at 25°C of 10 g/100g-H₂O or greater.

2. The inkjet ink for textile printing according to claim 1,
wherein a mass ratio of a content of the urethane resin to a content of the dye is from 0.1 to 10.

3. The inkjet ink for textile printing according to claim 1 or 2,
wherein a mass ratio of a content of the urethane resin to a content of the dye is from 0.2 to 10.

4. The inkjet ink for textile printing according to any one of claims 1 to 3,
wherein an average particle diameter of the colored resin particles is 200 nm or less.

5. The inkjet ink for textile printing according to any one of claims 1 to 4,
wherein the aqueous organic solvent contains tetraethylene glycol.

6. The inkjet ink for textile printing according to any one of claims 1 to 5, further comprising:
a pigment.

7. The inkjet ink for textile printing according to any one of claims 1 to 6, further comprising:
a crosslinking agent.

8. The inkjet ink for textile printing according to any one of claims 1 to 7,
wherein a content of the colored resin particles is 0.5 mass% to 30 mass%.

9. An ink set comprising, at least:
a black ink;
a yellow ink;
a magenta ink; and
a cyan ink,
wherein at least one ink of the ink set is the inkjet ink for textile printing according to any one of claims 1 to 8.

10. The ink set according to claim 9,
wherein the black ink is the inkjet ink for textile printing according to any one of claims 1 to 8.

11. An ink cartridge filled with the inkjet ink for textile printing according to any one of claims 1 to 8.

12. An inkjet textile printing method comprising:
a step of directly printing the inkjet ink for textile printing according to any one of claims 1 to 8 on a fabric by an inkjet method.

13. The inkjet textile printing method according to claim 12,
wherein the fabric comprises at least one selected from cotton or polyester.

14. The inkjet textile printing method according to claim 12 or 13,
wherein the fabric is a fabric pretreated with an aqueous pretreatment liquid containing an aggregating agent.

15. The inkjet textile printing method according to any one of claims 12 to 14, further comprising:
a heat treatment step.

16. A colored resin particle dispersion comprising:
water;
an aqueous organic solvent;
a wax, and
colored resin particles,
wherein the colored resin particles contain a urethane resin and at least one type of dye selected from the group consisting of an oil-soluble dye, a disperse dye, and a vat dye,
the urethane resin has an acid value of 5 to 90 mgKOH/g,
wherein the aqueous organic solvent preferably has an aqueous solubility at 25°C of 10 g/100g-H₂O or greater.

## Patentansprüche

1. Tintenstrahltinte für Textildruck umfassend:
Wasser;
ein wässriges organisches Lösungsmittel:
farbige Harzpartikel, und
ein Wachs,
wobei die farbigen Harzpartikel ein Urethanharz und mindestens einen Typ Farbstoff, ausgewählt aus der Gruppe bestehend aus einem öllöslichen Farbstoff, einem Dispergierfarbstoff und einem Küpenfarbstoff enthält, und
das Urethanharz einen Säurewert von 5 bis 90 mgKOH/g aufweist,
wobei das wässrige organische Lösungsmittel eine Wasserlöslichkeit bei 25°C von 10 g/100g-H₂O oder größer hat.

2. Tintenstrahltinte für Textildruck nach Anspruch 1,
wobei ein Masseverhältnis eines Gehalts des Urethanharzes zu einem Gehalt des Farbstoffs 0,1 bis 10 beträgt.

3. Tintenstrahltinte für Textildruck nach Anspruch 1 oder 2.
wobei ein Masseverhältnis eines Gehalts des Urethanharzes zu einem Gehalt des Farbstoffs 0,2 bis 10 beträgt.

4. Tintenstrahltinte für Textildruck nach einem der Ansprüche 1 bis 3.
wobei ein durchschnittlicher Partikeldurchmesser der farbigen Harzpartikel 200 nm oder weniger beträgt.

5. Tintenstrahltinte für Textildruck nach einem der Ansprüche 1 bis 4,
wobei was wässrige organische Lösungsmittel Tetraethylenglykol enthält.

6. Tintenstrahltinte für Textildruck nach einem der Ansprüche 1 bis 5, ferner umfassend:
ein Pigment.

7. Tintenstrahltinte für Textildruck nach einem der Ansprüche 1 bis 6, ferner umfassend:
ein Vernetzungsmittel.

8. Tintenstrahltinte für Textildruck nach einem der Ansprüche 1 bis 7,
wobei ein Gehalt an den farbigen Harzpartikeln 0,5 Masse% bis 30 Masse% beträgt.

9. Tintenset umfassend mindestens:
eine schwarze Tinte;
eine gelbe Tinte;
eine magenta-farbene Tinte; und
eine cyan-farbene Tinte,
wobei mindestens eine Tinte des Tintensets die Tintenstrahltinte für Textildruck nach einem der Ansprüche 1 bis 8 ist.

10. Tintenset nach Anspruch 9,
wobei die schwarze Tinte die Tintenstrahltinte für Textildruck nach einem der Ansprüche 1 bis 8 ist.

11. Tintenkartusche, gefüllt mit der Tintenstrahltinte für Textildruck nach einem der Ansprüche 1 bis 8.

12. Tintenstrahltextildruckverfahren umfassend:
einen Schritt des direkten Druckens der Tintenstrahltinte für Textildruck nach einem der Ansprüche 1 bis 8 auf einen Stoff durch ein Tintenstrahlverfahren.

13. Tintenstrahltextildruckverfahren nach Anspruch 12.
wobei der Stoff mindestens eines, ausgewählt aus Baumwolle und Polyester umfasst.

14. Tintenstrahltextildruckverfahren nach Anspruch 12 oder 13,
wobei der Stoff ein Stoff ist, der mit einer ein Aggregiermittel umfassenden wässrigen Vorbehandlungsflüssigkeit vorbehandelt ist.

15. Tintenstrahltextildruckverfahren nach einem der Ansprüche 12 bis 14, ferner umfassend:
einen Wärmebehandlungsschritt.

16. farbige Harzpartikeldispersion umfassend:
Wasser;
ein wässriges organisches Lösungsmittel:
farbige Harzpartikel, und
ein Wachs.
wobei die farbigen Harzpartikel ein Urethanharz und mindestens einen Typ Farbstoff, ausgewählt aus der Gruppe bestehend aus einem öllöslichen Farbstoff, einem Dispergierfarbstoff und einem Küpenfarbstoff enthält, und
das Urethanharz einen Säurewert von 5 bis 90 mgKOH/g aufweist,
wobei das wässrige organische Lösungsmittel vorzugsweise eine Wasserlöslichkeit bei 25°C von 10 g/100g-H₂O oder größer hat.

## Revendications

1. Encre pour jet d'encre pour impression sur tissu, comprenant :
de l'eau :
un solvant organique aqueux ;
des particules de résine colorées, et
une cire,
dans laquelle les particules de résine colorées contiennent une résine d'uréthane et au moins un type de colorant sélectionné parmi le groupe consistant en un colorant oléosoluble. un colorant dispersé, et un colorant de cuve, et
la résine uréthane présence un indice d'acidité allant de 5 à 90 mgKOH/g, et
dans laquelle le solvant organique aqueux présente une solubilité aqueuse à 25 °C supérieure ou égale à 10 g/100 g-H₂O.

2. Encre pour jet d'encre pour impression sur tissu selon la revendication 1,
dans laquelle un rapport de masse entre la teneur de la résine d'uréthane et une teneur du colorant s'étend de 0,1 à 10.

3. Encre pour jet d'encre pour impression sur tissu selon la revendication 1 ou 2,
dans laquelle un rapport de masse entre la teneur de la résine d'uréthane et une teneur du colorant s'étend de 0,2 à 10.

4. Encre pour jet d'encre pour impression sur tissu selon l'une quelconque des revendications 1 à 3.
dans laquelle un diamètre de particules moyen des particules de résine colorées est inférieur ou égal à 200 nm.

5. Encre pour jet d'encre pour impression sur tissu selon l'une quelconque des revendications 1 à 4,
dans laquelle le solvant organique aqueux contient du tétraéthylèneglycol.

6. Encre pour jet d'encre pour impression sur tissu selon l'une quelconque des revendications 1 à 5, comprenant en outre :
un pigment.

7. Encre pour jet d'encre pour impression sur tissu selon l'une quelconque des revendications 1 à 6, comprenant en outre :
un agent de réticulation.

8. Encre pour jet d'encre pour impression sur tissu selon l'une quelconque des revendications 1 à 7,
dans laquelle une teneur des particules de résine colorées s'étend de 0,5 % en masse à 30 % en masse.

9. Ensemble d'encres, comprenant au moins :
une encre noire ;
une encre jaune ;
une encre magenta, et
une encre cyan,
dans lequel au moins une encre de l'ensemble d'encres est l'encre pour jet d'encre pour impression sur tissu selon l'une quelconque des revendications 1 à 8.

10. Ensemble d'encres selon la revendication 9,
dans lequel l'encre noire est l'encre pour jet d'encre pour impression sur tissu selon l'une quelconque des revendications 1 à 8.

11. Cartouche d'encre remplie avec l'encre pour jet d'encre pour impression sur tissu selon l'une quelconque des revendications 1 à 8.

12. Procédé d'impression sur tissu à jet d'encre, comprenant l'étape suivante :
une étape pour imprimer directement l'encre pour jet d'encre pour impression sur tissu selon l'une quelconque des revendications 1 à 8 sur un tissu par un procédé à jet d'encre.

13. Procédé d'impression sur tissu à jet d'encre selon la revendication 12,
dans lequel le tissu comprend au moins un élément sélectionné parmi le coton ou le polyester.

14. Procédé d'impression sur tissu à jet d'encre selon la revendication 12 ou 13,
dans lequel le tissu est un tissu prétraité avec un liquide de prétraitement aqueux contenant un agrégant.

15. Procédé à jet d'encre impression sur tissu selon l'une quelconque des revendications 12 à 14. comprenant en outre l'étape suivante :
une étape de traitement thermique.

16. Dispersion de particules de résine colorées, comprenant :
de l'eau ;
un solvant organique aqueux :
une cire, et
des particules de résine colorées,
dans laquelle les particules de résine colorées contiennent une résine d'uréthane et au moins un type de colorant sélectionné parmi le groupe consistant en un colorant oléosoluble, un colorant dispersé, et un colorant de cuve, et
la résine uréthane présence un indice d'acidité allant de 5 à 90 mgKOH/g, et
dans laquelle le solvant organique aqueux présente une solubilité aqueuse à 25 °C supérieure ou égale à 10 g/100 g-H₂O.
